# EUROPEAN PATENT SPECIFICATION

(11) **EP 2 097 464 B1**
(45) Date of publication and mention of the grant of the patent: **11.09.2013**
(21) Application number: 07869006.2
(22) Date of filing: 06.12.2007
(51) Int. Cl.: C08G 18/10, C08G 18/60, C08G 69/26, C08G 69/40, C08G 18/12, C08G 18/32, C08G 18/34, C08G 18/40, C08G 18/48, C08G 18/42, C08G 18/50, C08G 18/62, C08G 18/76, C09J 175/04

(54) **POLYAMIDE POLYOLS AND POLYURETHANES, METHODS FOR MAKING AND USING, AND PRODUCTS MADE THEREFROM**
POLYAMIDPOLYOLE UND POLYURETHANE, VERFAHREN ZU IHRER HERSTELLUNG UND VERWENDUNG SOWIE DARAUS HERGESTELLTE PRODUKTE
POLYAMIDES POLYOLS ET POLYURÉTHANES, PROCÉDÉS DE FABRICATION ET D'UTILISATION ASSOCIÉS, ET PRODUITS FABRIQUÉS À PARTIR DE CES POLYAMIDES POLYOLS ET POLYURÉTHANES

(30) Priority: 06.12.2006 US 868923 P; 05.12.2007 US 950556
(43) Date of publication of application: 09.09.2009
(73) Proprietor: Arizona Chemical Company, Jacksonville FL 32246 (US)
(72) Inventor: LOCKO, George Allison, Savannah, GA 31411-2825 (US); PAVLIN, Mark Stanley, Kingsport, TN 37664 (US); HARMAN, Nancy Webb, Savannah, GA 31405 (US); ROBINSON, Demery Dale, Savannah, GA 31406 (US); ASTROLOGES, Gary William, Savannah, GA 31419 (US)
(74) Representative: Beetz, Tom
(86) International application number: PCT/US2007/086608
(87) International publication number: WO 2008/070762

(56) References cited:
- EP-A1- 0 449 419
- US-A- 4 147 679
- US-A- 5 177 171
- US-A- 5 786 405
- US-A1- 2005 165 211
- US-A1- 2005 165 211
- US-A1- 2005 272 900
- US-A1- 2005 272 909
- US-B1- 6 683 151

## Description

### 1. Field of the Invention

The present invention relates to polyols and polyurethanes, to methods of making a using, and to products made therefrom. In another aspect, the present invention relates to polyamide polyols and polyurethanes, to methods of making such polyols and polyurethanes, and to products made therefrom. In even another aspect, the present invention relates to polyamide diols and polyurethanes, to methods of making such diols and polyurethanes, and to products made therefrom.

### 2. Description of the Related Art

A polyurethane may generally be described a polymer consisting of a chain of organic units joined by urethane links. Any number of polyurethanes of various physical properties may be produced, making them widely used in a variety of applications as flexible and rigid foams, durable elastomers and high performance adhesives and sealants, fibers, seals, gaskets, condoms, carpet underlay, and hard plastic parts.

In general, the main polyurethane producing reaction is between a diisocyanate and a polyol.

There are a number of patents relating to polyurethanes and polyamides, including the following.

U. S. Pat. No. 5,021,507, issued June 4, 1991, to Stanley et al., discloses acrylic modified reactive urethane hot melt adhesive compositions. As disclosed therein, the addition to urethane prepolymers of low molecular weight polymers formed from ethylenically unsaturated monomers which do not contain active hydrogen provides a hot melt adhesive which can be readily coated at a viscosity of 3000 to 50,000 cps. at 120 C. without the need for additional tackifiers or plasticizers and which has improved initial cohesive strength as well as improved strength after aging of the cured bond. In a preferred embodiment of the invention, the ethylenically unsaturated monomers are polymerized in the non-isocyanate containing components of the isocyanate terminated prepolymer.

U. S. Pat. No. 5,075,407, issued December 24, 1991, to Cody et al., discloses a foamable thermosetting polyurethane structural adhesive compositions and processes for producing the same. The method includes dispersing a water-generating curing composition into a polyurethane base resin to form a nonactivated adhesive composite, and activating the same by heating to form an adhesive composition. Another aspect of the invention relates to dispersing a water-generating compound and an amineterminated solid polyamide resin into the polyurethane base resin and heatactivating the same to form an adhesive composition.

U. S. Pat. No. 5,130,382, issued July 14, 1992, to Speranza et al., discloses hydroxy terminated polyoxypropylene polyamides, by reacting an excess of a dicarboxylic acid component with a diamine mixture composed of a higher molecular weight polyoxypropylene diamine and a lower molecular weight polyoxypropylene diamine, and by reacting the intermediate polyamide with a molar excess of an oxyethylene amino alcohol.

U. S. Pat. No. 5,455,309 issued October 3, 1995, to Albini et al., discloses methods of making and using thermoplastic poly(amide-urethane) block copolymers having excellent flexibility at low temperatures. The methods comprise reacting substantially linear polyamides, the polyamides being based on dimerized fatty acids and terminated by carboxyl and/or amino groups and aliphatic or cycloaliphatic polyethers and/or reaction products thereof with 2,3-epoxypropanol. The reaction products contain substantially no free isocyanate groups or epoxide groups. The invention also relates to the use of these products as adhesives and corrosion inhibitors for metallic and/or wooden materials.

U. S. Pat. Nos. 5,783,657 5,998,570 respectively issued July 21, 1998 and December 7, 1999, both to Pavlin et al., disclose that a low molecular weight, ester-terminated polyamide may be blended with a liquid hydrocarbon to form a transparent composition having gel consistency. The gel contains about 5-50% ester-terminated polyamide, with the remainder preferably being pure hydrocarbon. The gels are useful in formulating personal care products and other articles wherein some degree of gel-like or self-supporting consistency is desired.

U. S. Pat. No. 5,866,656 issued February 2, 1999, to Hung et al., discloses polyurethane hotmelt adhesives with reactive acrylic copolymers.

U. S. Pat. No. 5,902,841 , issued May 11, 1999, to Jaeger et al., discloses a phase change ink composition is disclosed wherein the ink composition utilizes colorant in combination with a selected phase change ink carrier composition containing at least one hydroxy-functional fatty amide compound.

"Preparation of high-temperature polyurethane by alloying with reactive polyamide," J. Polym. Sci., Part A, Polym. Chem., 2002, vol. 40, no20, pp. 3497-3503 (28 ref.), published online September 3, 2002, discloses a series of novel poly(urethane amide) films were prepared by the reaction of a polyurethane (PU) prepolymer and a soluble polyamide (PA) containing aliphatic hydroxyl groups in the backbone. The PU prepolymer was prepared by the reaction of polyester polyol and 2,4-tolylenediisocyanate and then was end-capped with phenol. Soluble PA was prepared by the reaction of 1-(m-aminophenyl)-2-(p-aminophenyl)ethanol and terephthaloyl chloride. The PU prepolymer and PA were blended, and the clear, transparent solutions were cast on glass substrates; this was followed by thermal treatments at various temperatures to produce reactions between the isocyanate group of the PU prepolymer and the hydroxyl group of PA. The opaque poly(urethane amide) films showed various properties, from those of plastics to those of elastomers, depending on the ratio of the PU and PA components. Dynamic mechanical analysis showed two glasstransition temperatures (T[g]'s), a lower T[g] due to the PU component and a higher T[g] due to the PA component, suggesting that the two polymer components were phase-separated. The rubbery plateau region of the storage modulus for the elastic films was maintained up to about 250 °C, which is considerably higher than for conventional PUs. Tensile measurements of the elastic films of 90/10 PU/PA showed that the elongation was as high as 347%. This indicated that the alloying of PU with PA containing aliphatic hydroxyl groups in the backbone improved the high-temperature properties of PU and, therefore, enhanced the use temperature of PU.

U. S. Pat. No. 6,465,104 issued October 15, 2002, to Krebs et al., discloses modified polyurethane hotmelt adhesive compositions which are solid at room temperature and capable of being cured by moisture are obtained by combining the reaction product of a polyisocyanate and a low molecular weight polymer derived from ethylenically unsaturated monomers and containing active hydrogen groups such as hydroxyl with an isocyanatecontaining polyurethane prepolymer derived from one or more polyols. The low molecular weight polymer component may, for example, be obtained by free radical polymerization of mixtures of unsaturated monocarboxylic acids, alkyl esters of unsaturated monocarboxylic acids, and/or hydroxyalkyl esters of unsaturated monocarboxylic acids.

U. S. Pat. No. 6,482,878 issued November 19, 2002, to Chu, discloses polyurethane hotmelt adhesives with acrylic copolymers and thermoplastic resins which are solid at room temperature. In one embodiment, the polyurethane adhesive or sealant composition comprises in percentages by weight (a) from about 20% to about 75% of a urethane prepolymer; (b) from about 1% to about 66% of a reactive, hydroxyl containing, or a nonreactive polymer formed from ethylenically unsaturated monomers; and (c) from about 20% to about 75% of a thermoplastic resin. In another embodiment, the polyurethane adhesive or sealant composition comprises, in percentages by weight of the polyurethane composition (a) from about 10% to about 90% of a urethane prepolymer; and (b) from about 5% to about 90% of a thermoplastic resin which is an ethylene vinylacetate/ethylene acrylate terpolymer.

U. S. Pat. Nos. 6,552,160 and 6,875,245 respectively issued April 22, 2003 and April 5, 2005, both to Pavlin, disclose ester-terminated poly(ester-amides) useful for formulating transparent gels in low polarity fluids.

A resin composition is prepared by reacting components comprising dibasic acid, diamine, polyol and monoalcohol, wherein (a) at least 50 equivalent percent of the dibasic acid comprises polymerized fatty acid; (b) at least 50 equivalent percent of the diamine comprises ethylene diamine; (c) 10-60 equivalent percent of the total of the hydroxyl and amine equivalents provided by diamine, polyol and monoalcohol are provided by monoalcohol; and (d) no more than 50 equivalent percent of the total of the hydroxyl and amine equivalents provided by diamine, polyol and monoalcohol are provided by polyol. This resin composition may be formulated into, for example, personal care products, fragrance releasing products and candles.

U. S. Pat. No. 6,870,011, issued March 22, 2005 to MacQueen et al., discloses hydrocarbon-terminated polyether-polyamide block copolymers and uses thereof. A composition comprising (a) a resin composition comprising a block copolymer of the formula hydrocarbon-polyether-polyamide-polyether-hydrocarbon; and (b) a polar liquid. The block copolymer may be prepared by a process comprising reacting together reactants comprising dimer acid, diamine, and a polyether having termination at one end selected from amine, hydroxyl and carboxyl, and termination at another end selected from hydrocarbons. The polar liquid may be one or more of an aromatic liquid, a polar aprotic liquid, a ketonecontaining liquid, an ester-containing liquid, an ether-containing liquid, an amide-containing liquid and a sulfoxide-containing liquid. The composition may be a gel at room temperature.

U. S. Pat. No. 6,956,099 issued October 18, 2005, to Pavlin discloses polyamide-polyether block copolymers having linked internal polyether blocks and internal polyamide blocks have advantageous physical properties and solvent-gelling abilities.

It is noted that many polyurethane adhesives used in large scale lamination contain acrylic polymers or acrylic polyol polymers to obtain the necessary specific adhesion. Formulation with these acrylic polymers is difficult due to their thermal instability and clean up of the roll coaters from acrylic polyurethanes is difficult due to their high molecular weight.

There is a need in the art for improved polyols and improved polyurethanes which may overcome any of the prior art deficiencies.

BRIEF SUMMARY OF THE INVENTION

According to one embodiment of the present invention, there is provided a method of making a polyamide diol. The method includes contacting a diamine, dicarboxylic acid and a hydroxy substituted carboxylic acid together under conditions sufficient to form the polyamide diol. The diamine comprises polymeric diamines and non-polymeric diamines.

According to another embodiment of the present invention, there is provided a polyamide diol composition represented by the formula:

T-(Z-(C=O)-R2-(C=O)]ₙ-Z-T

wherein n is at least 1; each T independently is selected, may be the same or different, and is H or X-R1 -(C=O); each X is independently selected, may be the same or different and is H or OH; each R1 is independently selected, may be the same or different, and is a hydrocarbon group having from 2 to 54 carbon atoms; each R2 is independently selected, may be the same or different, and is a hydrocarbon group having from 2 to 54 carbon atoms; Z is of the form NLN, a pair of nitrogen atoms joined by a hydrocarbon link L, L may be a hydrocarbon group between the nitrogen atoms, or it may be a cyclical hydrocarbon group into which at least one of the nitrogen atoms is incorporated therein, and wherein at least 1 but less than all Z groups comprises a polyoxyalkyl group.

According to even another embodiment of the present invention, there is provided

A polyurethane composition represented by the formula:

OCN-R4-N-(C=O)-P-[(C=O)-N-R4-N-(C=O)-P]ₘ-(C=O)-N-R4-NCO

wherein m is at least 1; each R4 is independently selected, may be the same or different, and is a C2 to C100 hydrocarbon group; each P is independently selected, may be the same or different, and is a polyamide diol represented by the formula

T-[Z-(C=O)-R2-(C=O)]ₙ-Z-T

wherein n is at least 1; each T independently is selected, may be the same or different, and is H or X-R1-(C=O); each X is independently selected, may be the same or different and is H or OH; each R1 is independently selected, may be the same or different, and is a hydrocarbon group having from 2 to 54 carbon atoms; each R2 is independently selected, may be the same or different, and is a hydrocarbon group having from 2 to 54 carbon atoms; and Z is of the form NLN, a pair of nitrogen atoms joined by a hydrocarbon link L, L may be a hydrocarbon group between the nitrogen atoms, or it may be a cyclical hydrocarbon group into which at least one of the nitrogen atoms is incorporated therein.

According to still another embodiment of the present invention, there is provided a method of making polyurethane of the present invention. The method includes contacting a diisocyanate and a polyamide diol together under conditions sufficient to form a polyurethane.

According to yet another embodiment of the present invention, there is provided an article of manufacture. The articles comprises a substrate and polyurethane of the present invention supported by the substrate. The polyurethane is of the formula

OCN-R4-N-(C=O)-P-[(C=O)-N-R4-N-(C=O)-P]ₘ-(C=O)-N-R4-NCO

wherein m is the number of repeating units; each R4 is independently selected, may be the same or different, and is a C2 to C100 hydrocarbon group; each P is independently selected, may be the same or different, and is a polyamide diol.

According to even still another embodiment of the present invention, there is provided a method for adhering. The method includes bringing together a first surface, a second surface, and a polyurethane adhesive which is a polyurethane of the present invention. The polyurethane adhesive is of the formula

OCN-R4-N-(C=O)-P-[(C=O)-N-R4-N-(C=O)-P]ₘ-(C=O)-N-R4-NCO

wherein m is the number of repeating units; each R4 is independently selected, may be the same or different, and is a C2 to C100 hydrocarbon group; each P is independently selected, may be the same or different, and is a polyamide diol.

DETAILED DESCRIPTION OF THE INVENTION

Polyamide diols

According to the present invention, there is provided a low molecular weight polyamide diol containing hydroxyl functionality suitable for use in polyurethane synthesis. This polyamide diol composition is shown in the following EQN. 1:

T-[Z-(C=O)-R2-(C=O)]ₙ-Z-T (EQN. 1)

It should in general be understood that any like variable in EQN. 1 or incorporated therein (for example R1 of T), will be independently selected, and may be the same and different. For example, the two T's shown in EQN . 1 are independently selected and may be the same or different.

n is the number of repeating units and will generally be selected to provide a polyamide diol with a molecular weight of at least 1000. More particularly, n will be selected to provide a polyamide diol having a molecular weight ranging on the low end from 1000, 2000, 2500, 5000, to on the high end to 5000, 10000, 50000, 100000 or 200000. As a suitable non-limiting example, n will be selected to provide a polyamide diol having a molecular weight ranging from about 2500 to about 5000. Of course, as the repeating unit may have a wide range of molecular weights dependent upon selection of Z and R2, n will generally be lower for higher molecular weight repeating units and higher for lower molecular weight repeating units. Without limiting selection of n to provide the desired molecular weights as detailed above, n will be at least 1, and in some non-limiting embodiments will generally be in the range of 1 to 350, 1000, 10000 or more.

For a polyamide diol of EQN. 1, T may be H or X-R1-(C=O). Each T is independently selected and may be the same or different. In some non-limiting embodiments, at least one T will be derived from a hydroxy substituted carboxylic acid. Further embodiments of this invention are directed to compositions where T is H, compositions where T is X-R1-(C=O), compositions wherein one T is H and the other T is X-R1-(C=O), or compositions that are a mixture thereof. For such compositional mixtures, the compounds where both T's are X-R1 -(C-O) will comprise at least 80, 85, 90 or 95 weight percent of the mixture, and the compounds where at least one T is H will comprises the balance, based on the total with of the compounds of EQN. 1 in the mixture.

X is generally H or OH. Each X is independently selected and may be the same or different.

R1 may be generally described as a hydrocarbon group, with optional substitution of the carbon and hydrogen atoms. The carbon atoms of R1 may be linear, branched or cyclic. R1 is preferably an alkyl or cycloalkyl group. R1 may be saturated or unsaturated. If cyclic R1 may have some degree of aromaticity. The number of carbon atoms in R1 will range on the low end from 2, 4, or 6 and on the high end to 18, 24, 36, or 54. Non-limiting examples of suitable ranges of carbon atoms in R1 include 2 to 54, 4 to 36, and 6 to 24. Any desired suitable substitution may be made, non-limiting examples of which include substitution of any hydrogen with halogen, and/or substitution of any carbon with oxygen or nitrogen. Preferably R1 contains halogen substitution of one or more hydrogen atoms. Each R1 is independently selected and may be the same or different.

R2 may be generally described as a hydrocarbon group, with optional substitution of the carbon and hydrogen atoms. The carbon atoms of R2 may be linear, branched or cyclic. R2 is preferably an alkyl or cycloalkyl group. R2 may be saturated or unsaturated. If cyclic R2 may have some degree of aromaticity. The number of carbon atoms in R2 will range on the low end from 2, 4, 6, 12, 16 or 18 and on the high end to 10, 12, 18, 36, or 54. Non-limiting examples of suitable ranges of carbon atoms in R2 include 2 to 54, 2 to 36, 2 to 18, 2 to 10, 1 2 to 54, 16 to 54, and 18 to 54. Any desired suitable substitution may be made, non-limiting examples of which include substitution of any hydrogen with halogen, and/or substitution of any carbon with oxygen or nitrogen. Preferably R2 contains halogen substitution of one or more hydrogen atoms. Each R2 is independently selected and may be the same or different.

Z is a diamine which may be generally described as having a pair of nitrogen atoms N joined by a hydrocarbon link L therebetween, with resultant amine groups being primary or secondary amines. Z connects to the polymer chain by the nitrogen atoms on each end of Z. As for the link L between the pair of nitrogen atoms, it may be one or more hydrocarbon groups. Each Z is independently selected and may be the same or different.

More specifically, the link L between the pair of nitrogen atoms may be a hydrocarbon group R3 between the nitrogen atoms as shown in EQN 2 below, or it may a cyclical hydrocarbon group in which one (EQN. 4) or both (EQN. 3) of the pair of nitrogen atoms may be incorporated into and linked, represented by the two R3 groups as shown in EQNs. 3 and 4 below.

EQN.2 N-R3-N

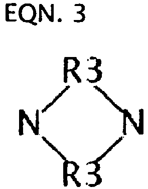

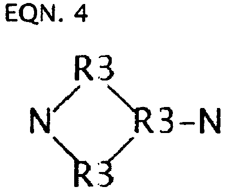

R3 may be generally described as a hydrocarbon group, with optional substitution of the carbon and hydrogen atoms. The carbon atoms of R3 may be linear, branched or cyclic. R3 is preferably an alkyl or cycloalkyl group. R3 may be saturated or unsaturated. If cyclic R3 may have some degree of aromaticity. Any desired suitable substitution may be made, non-limiting examples of which include substitution of any hydrogen with halogen, and/or substitution of any carbon with oxygen or nitrogen. Preferably R3 contains halogen substitution of one or more hydrogen atoms. Each R3 is independently selected and may be the same or different.

The total number of carbon atoms in the link L will depend on whether the diamine is a lower alkyl diamine, dimer acid containing diamine, or a polymeric diamine. The number of carbon atoms in R3 will then depend on the number of carbon atoms in link L, and then on whether the diamine is of the form of EQN. 2, 3 or 4.

If the diamine is a lower alkyl diamine, the number of carbon atoms in L will range on the low end from 2, 4, or 6 and on the high end to 10, 12 or 24. Non-limiting examples of suitable ranges of carbon atoms in L include 2 to 10, 2 to 12, and 2 to 24.

If the diamine is a dimer acid containing diamine, the number of carbon atoms in L will range on the low end from 26, 32 or 36 and on the high end to 54 or 60. Non-limiting examples of suitable ranges of carbon atoms in L include 26 to 60, 32 to 54, and 36 to 54.

If the diamine is a polymeric diamine (generally described as oligomers with amine functionalty on both ends, with the preceding lower alkyl diamine and dimer acid containing diamine being considered "nonpolymeric diamines"), the number of carbon atoms in L will range on the low end from 50 or 75 and on the high end to 100, 150, or 200. Non-limiting examples of suitable ranges of carbon atoms in L include 50 to 250, 75 to 150 and 75 to 100. Molecular weight will of course depend upon the chemical structure of the polymeric diamine. As a non-limiting example, commercially available polymeric diamines have molecular weights in the range of about 148 to about 4000. Of course, polymeric diamines with molecular weights outside of that range may be utilized.

Polyamides as a class of polymer are well known in the art. As used herein, the term "polyamide" denotes a macromolecule containing a plurality of amide groups, i.e., groups of the formula --NH--C(=O)-- and/or --C(=O)--NH--. As is very well known in the art, polyamides are commonly prepared via a condensation polymerization process whereby diamines are reacted with polyacids such as a polycarboxylic acid.

As discussed below, the polyamide diols of the present invention are likewise conveniently prepared by reacting diamines with polyacids, except that hydroxy substituted carboxylic acid or a lactone is also included in the reaction mixture.

Thus, in a non-limiting method of the present invention, the polyamide diols of EQN. 1 may be obtained by reacting a diamine, a dicarboxylic substituted acid, and a hydroxy substituted carboxylic acid or lactone in a condensation polymerization reaction to form the desired polyamide diol.

Any suitable diamine may be utilized in the present invention, with the understanding that the particular diamine selected will generally depend on the ultimate polyamide diol desired, and/or on the ultimate polyurethane desired. Preferably, a mixture of diamines is utilized providing a polyamide diol of EQN. 1 with a mixture of Z groups dependent upon the mixture of diamines. Preferably, the mixture of diamines comprises in the range from 0.1, 4.5, 7, 50, or 70 weight percent polymeric amine, ranging up to 5.5, 9, 20, 75, 80 or 99.9 weight percent polymeric amine, with the weight percent based on the total weight of the diamines in the mixture of diamines. Of course, non-polymeric amines make up 100 weight percent less the weight percent of the polymeric amines. More preferably, polymeric amines comprise in the range of about 50 to 80 weight percent, even more preferably in the range of about 70 to 75 weight percent of the mixture of amines.

The diamine compound may be one or more of an aliphatic, cycloaliphatic or aromatic diamine compound having from 2 to 200 carbon atoms. Non-limiting examples of suitable diamines include those having the formulas of EQNs. 2, 3 and 4 above wherein the amine groups are protonated.

Non-limiting examples of diamines suitable for use in the present invention include alkylene diamine compounds, ethylene diamine, 1,2-diaminopropane, 1,3-diaminopropane, 1,4-diaminobutane, p-xylene diamine, 1,6-hexamethylene diamine, 2,-methylpentamethylene diamine, 4,4'-methylenebis(cyclohexylamine), 1,2-diamino-2-methylpropane, 1,5-diaminopentane, 2,2-dimethyl-1,3-propanediamine, 2-methyl-1,5-pentanediamine, 1,7- diaminoheptane, 1,8-diaminooctane, 2,5-dimethyl-2,5-hexanediamine, 1,9- diaminononane, 2,2-di-(4-cyclohexylamine)propane, polyglycol diamines, isophorone diamine, m-xylene diamine, cyclohexanebis(methylamine), bis-1,4-(2'-aminoethyl)benzene, 9-aminomethylstearylamine, 10-aminoethylstearylamine; 1,3-di-4-piperidyl propane, 1,10-diaminodecane, 1,12-diaminododecane, 1,18-diaminooctadecane, piperazine, N-aminoethylpiperazine, bis-(3-aminopropyl)piperazine, polyoxyalkylenediamines, polyethylene polyamines such as diethylene triamine and triethylene tetramine, diethyltoluene diamine, methylene dianiline and bis(aminoethyl)diphenyl oxide, and dimer diamine compounds, such as C36-alkylene diamine.

Preferably, the diamines for use in the present invention include ethylenediamine, hexamethylenediamine, piperazine, polyoxyalkylenediamines such as polyoxypropylenediamines, m-xylenediamine. 1,2-diamino-2-methylpropane, 1 ,5- diaminopentane, 2,2-dimethyl-1,3-propanediamine, 2-methyl-1,5-pentanediamine, 1,7-diaminoheptane, 1,8-diaminooctane, 2,5-dimethyl-2,5-hexanediamine, N-aminoethylpiperazine, and 1,9- diaminononane.

More preferably, the diamines for use in the present invention include ethylenediamine, hexamethylenediamine, piperazine, N-aminoethylpiperazine, and polyoxypropylenediamines.

Ether-containing diamines may be utilized in those instances where it is desired to lower the melting point of the polyamide diol and increase compatibility with other polyols normally used in polyurethane formulations such as polypropylene glycol. Non-limiting examples of ether-containing diamaines include polyoxyalkylenediamines, and polyoxypropylenediamine.

Where hexamethylenediamine or ethylenediaminediamine is utilized, they will comprise an equivalent percent of the diamine which will range on the low end from 0.1, 12, or 25 equivalent percent to on the high end to 35, 50, or 100 equivalent percent. Non-limiting examples of suitable ranges of hexamethylenediamine or preferably ethylenediaminediamine include 0.1 to 100 equivalent percent, 12 to 50 equivalent percent, and 25 to 35 equivalent percent.

Where piperazine is utilized, it will comprise an equivalent percent of the diamine which will range on the low end from 0.1, 10, 25, 35, or 55 equivalent percent to on the high end to 20, 30, 35, 65, 80, 90, or 100 equivalent percent. Non-limiting examples of suitable ranges of piperazine include 0.1 to 80 equivalent percent, 35 to 65 equivalent percent, and 55 to 65 equivalent percent.

Where a polyoxyalkylenediamine, a non-limiting example of which includes polyoxypropylenediamine, is utilized, it will comprise an equivalent percent of the diamine which will range on the low end from 0.1, 4.5, 7, 25, 50, or 70 equivalent percent to on the high end to 5.5, 9, 20, 50, 75, 80 or 100 equivalent percent. Of course, the equivalent percent utilized will vary depending upon the particular polyoxyalkylenediamaine utilized and its molecular weight. Non-limiting examples of suitable ranges of polyoxypropylenediamine include 0.1 to 20 equivalent percent, 7 to 9 equivalent percent (for Jeffamine D2000 having a MW of 2000), and 4.5 to 5.5 equivalent percent (for Jeffamine D400 having a MW of 400).

The preferred mixture of diamines will comprise a polymeric diamine and a non-polymeric diamine, with weight percentages as described above. Preferably, the non-polymeric diamine will comprise piperazine in the weight percentages as described above. Most preferably, the mixture of diamines will comprise polyoxypropylenediamine, piperazine and etheylenediamine, in the weight percentages as described above.

Any suitable dicarboxylic acid may be utilized in the present invention. Of course, the particular dicarboxylic acid selected will generally depend on the ultimate polyamide diol desired, and/or on the ultimate polyurethane desired.

Dicarboxylic acids useful in the present invention include any dicarboxylic acid in which the carboxylic acid groups are separated by a bivalent hydrocarbon group which may be saturated or unsaturated, aliphatic, aromatic or cycloaliphatic or which may have two or more aliphatic, aromatic or cycloaliphatic. Also, any polycarboxylic acid in which the average functionality (number of functional groups per molecule) is greater than two, may be used. Corresponding acid anhydrides, esters, and acid chlorides of the foregoing acids are also suitable for use in the present invention and are encompassed by the term "dicarboxylic acid."

Non-limiting examples of dicarboxylic acids suitable for use in the present invention include those of EQN. 5 below, wherein R2 is as described above.

HOOC-R2-COOH (EQN. 5)

Polymerized fatty acids are suitable for use as a dicarboxylic acid in the present invention. The term "polymerized fatty acid" is intended to include any acid obtained by dimerizing saturated, ethylenically unsaturated or acetylenically unsaturated naturally occurring or synthetic monobasic aliphatic carboxylic acids containing as many as 54 or more carbon atoms. Polymerized fatty acids are a well known material of commerce, typically formed by heating long-chain unsaturated fatty acids, usually monocarboxylic acids, to about 200-250°C in the presence of a clay catalyst in order that the fatty acids polymerize. The product typically comprises dimer acid, isomeric dimmers, such as dicarboxylic acid formed by dimerization of the fatty acid, and trimer acid, such as tricarboxylic acid formed by trimerization of the fatty acid, and higher polymers. The polymerized fatty acid useful in this invention may be a liquid with an acid number of about 180-200. It may be hydrogenated or non-hydrogenated. Suitable monocarboxylic acids include C14, C16, C18, C20 and C22 monocarboxylic acids, which upon dimerization results respectively in C28, C32, C36, C40 and C44 dicarboxylic acids.

For example, for the commonly occurring C18 monocarboxylic acid, polymerization will generally produce C36 dicarboxylic acid and C54 tricarboxylic acid (as well as some unreacted C18 monocarboxylic acid). A common source of such species, can be found in tall oil fatty acid.

In a preferred embodiment of the invention, the dicarboxylic acid mixture may comprise polymerized fatty acid and further comprise any dicarboxylic acid of EQN. 5 that is not a polymerized fatty acid, described as follows.

In one preferred embodiment, suitable dicarboxylic acids which are not polymerized fatty acids include oxalic, glutaric, malonic, adipic, succinic, suberic, sebacic, azelaic, dodecanedioic, pimelic, terephthalic, isophthalic, phthalic, napthalene dicarboxylic acids and 1,4- or 1,3-cyclohexane dicarboxylic acids.

In another preferred embodiment, suitable dicarboxylic acids which are not polymerized fatty acids include 1,6- hexanedioic acid (adipic acid), 1,7-heptanedioic acid (pimelic acid), 1,8- octanedioic acid (suberic acid), 1,9-nonanedioic acid (azelaic acid), or 1,10-decanedioic acid (sebacic acid).

In some non-limiting embodiments, the dicarboxylic acid comprises at least 40% of the acid equivalents from polymerized fatty acids. In other embodiments, the dicarboxylic acid comprises in the range of about 40, 50, 60 or 60 to about 40, 50, 60, 70, 80, 90 or 100% of the acid equivalents from polymerized fatty acids. Non-limiting examples of suitable ranges include 40 to 100%, 40-80%, and 50-70%. The balance is from dicarboxylic acids which are not derived from polymerized fatty acids.

Polymerized fatty acid may contain large amounts of trimer acid, for example 15-20% in first pass dimer acid, or smaller amounts in the range of 4-6% of trimer acid in second pass dimer acid. Either can be used effectively. The added functionality from the additional trimer acid can be controlled by also adding the necessary amount of a hydroxy substituted carboxylic acid, or a monoacid such as stearic acid or tall oil fatty acid, or any monoacids mentioned below.

As is well known, the functionality of the polyamide diol resin can be determined by measuring its hydroxyl number, amine number, and number average molecular weight Mn (from GPC). The functionality is equal to the sum of the hydroxyl and amine numbers times Mn divided by 56,100. The added hydroxy substituted carboxylic acid or a monoacid, can be adjusted to preferably keep the functionality in the range of about 2 ±0.5, preferably 2 ±0.25, and more preferably 2 ±0.15.

In the practice of the present invention, any suitable hydroxy substituted carboxylic acid may be utilized in the present invention. The particular hydroxy substituted carboxylic acid selected will generally depend on the ultimate polyamide diol desired, and on the ultimate polyurethane desired.

Non-limiting examples of hydroxy substituted carboxylic acids suitable for use in the present invention include those of EQN. 6 below, wherein X and R1 are as described above.

X-R1-COOH (EQN. 6)

Non-limiting examples of hydroxy substituted carboxylic acids suitable for use on the present invention include 12-hydroxy stearic acid, 12-hydroxy olec acid (riconoleic acid) (may in some instances lower softening point), glycolic acid, lactic acid, 2-hydroxybutyric acid, 3-hydroxybutyric acid, 3-hydroxybenzoic acid, 4-hydroxybenzoic acid, 2-hydroxycinnamic acid, 3-hydroxycinnamic acid 10-hydroxydecanoic acid, 2-hydroxy-3,3-dimethylbutyric acid, 9-hydroxy-9-fluorenecarboxylic acid, 16-hydroxyhexadecanoic acid, 2-hydroxyhexanoic acid, alpha-hydroxyisobutyric acid, 2-hydroxyisocaproic acid, alpha-hydroxyisovaleric acid, 3-hydroxymandelic acid, and 9-hydroxynonanoic acid
4-hydroxyphenylacetic acid. More preferred hydroxy substituted carboxylic acids comprising in the range of 6 to 24 carbon atoms, even more preferred in the range of 6 to 18 carbon atoms. An even more preferred hydroxy
substituted acid is 1 2-hydroxy stearic acid.

The most preferred compounds are those with secondary OH for low reactivity with carboxylic acid but high reactivity with isocyanate that also have the hydroxyl greater than 6 bonds from the acid group to minimize internal side reactions. Suitable non-limiting examples include 12-hydroxystearic acid and lithocholic acid.

Hydroxy substituted carboxylic acids with secondary alcohols will have an OH group hindered from reaction with carboxylic acids to form unwanted esters but still reactive enough to react with isocyanates. Non-limiting examples include lactic acid, 2-hydroxybutyric acid, 3-hydroxybutyric acid, 2-hydroxy-3,3-dimethylbutyric acid, 2-hydroxyhexanoic acid, and alpha-hydroxyisovaleric acid.

Hydroxy substituted carboxylic acids with tertiary alcohols have an OH that is more sterically hindered. While they should provide good yields of polyols, they may react much slower with the isocyanates. Non-limiting examples include 9-hydroxy-9-fluorenecarboxylic acid and alpha-hydroxyisobutyric acid.

Hydroxy substituted carboxylic acids with primary OH groups should give some useful polyol product, and may give ester by-products. Non-limiting examples include glycolic acid, 10-hydroxydecanoic acid, 16-hydroxydecanoic acid and 9-hydroxynonanoic acid.

Hydroxy substituted carboxylic acids with aromatic OH groups should give good yields of polyol, but they may also give thermally unstable polyurethanes which would not be recommended for most hot melt applications. The addition of hydrogenated dimer may be used to improve thermal stability. Non-limiting examples include 3-hydroxybenzoic acid, 4-hydroxybenzoic acid, 2-hydroxycinnamic acid, 3-hydroxycinnamic acid, and 3-hydroxymandelic acid.

It is preferred that the hydroxy substituted carboxylic acid be sufficiently sterically hindered to reduce competition of the 2° OH group on the acid (which will result in a undesired polyester) with the amine groups on the diamine (which will result in the desired polyamide). The acid in the reaction mixture will generally comprise in the range of about 2-40 equivalent percent hydroxy substituted carboxylic acid preferably 2-20 equivalent percent hydroxy substituted carboxylic acid, to provide a hydroxyl number in the range of about of 0 - 70, preferably 20-35 mg KOH/gm.

It should be understood that a lactone may be utilized in place of or in conjunction with the hydroxy substituted carboxylic acid, provided that upon reaction with the amine, the lactone provides a structure to the polyamide having the form: X-R1-(C=O), wherein R1 and X are as described above. Suitable lactones include those derived from suitable hydroxy substituted carboxylic acids.

Suitable lactones include those disclosed in U.S. Patent No. 7,112,699, which is hereby incorporated by reference.

Any suitable amount of hydroxy substituted carboxylic acid may be included in the reaction mixture. In some non-limiting embodiments, the hydroxy substituted carboxylic acid is included in the reaction mixture to provide a polyamide diol with a desired hydroxyl number. In other embodiments, the hydroxy substituted carboxylic acid is included in the reaction mixture in sufficient quantity to give a polyamide with an hydroxyl number that ranges on the low end ranges from 0, 10 or 20, to on high end to 25, 35, 50 or 75. A non-limiting example of a suitable hydroxyl number range includes 20 to 35.

Any monoacid may be utilized in the present invention which will provide the desired polyamide diol of the present invention. Non-limiting examples of type of monoacids suitable, include those without other functional groups besides the carboxyl group reactive to acids, amines, or alcohols. While not necessary, preferably the monoacid is not highly volatile for ease in conducting the reaction. Thus, while monoacids of higher volatility may be utilized, those may make it more difficult to conduct the reaction.

Non-limiting examples of monoacids suitable for use in the present invention include stearic acid, isostearic acid (may be used to lower softening point), tall oil fatty acid, vegetable fatty acids, palmitic acid, myristic acid, benzoic acid, p-aminobenzoic acid (PABA), and phenylacetic acid, Preferably the monoacid is stearic acid, isostearic acid or tall oil fatty acid. Even more preferably, the monoacid is stearic acid.

In a non-limiting method embodiment of the present invention, the polyamide diols of EQN. 1 may be obtained by reacting the above described diamine, dicarboxylic acid, and hydroxy substituted carboxylic acid under suitable reaction conditions to form the desired polyamide diol.

Any conventional process for preparing a polyamide resin may be employed. As a non-limiting example, the various reactants may be blended and heated gradually to a temperature in the range of about 200 C to about 240 C. During the temperature elevation, condensed water and any volatilized amine may be removed.

A phosphoric acid catalyst may also be employed to accelerate and improve the efficiency of the reaction. Exemplary suitable catalysts include acid compounds such as phosphoric acid, oxides or carbonates of alkaline nature such as magnesium oxide or calcium oxide and halogen salts of polyvalent metals and acids. The catalyst is present in an amount of from about 0% to about 3% by weight of the resin, preferably in an amount of from about 0.005% to about 0.500% by weight, most preferably in an amount of about 0.01% by weight.

The amidation reaction may be carried out under any suitable conditions the will result in production of a polyamide diol of EQN. 1. In one non-limiting embodiment, either the acids or amines can be in slight excess with the amount of excess controlling the molecular weight. While the resulting polyamide diol may have any desirable molecular weight, in some non-limiting embodiments it is at least 1000 Daltons. In other non-limiting embodiments the resulting polyamide diol will have a molecular weight which will range on the low end from 1000, 2000, 2500 or 5000 to a high end of 5000, 10,000, 50,000, 100,000 or 200,000 Daltons.

The amidation may be carried out for any suitable reaction time to any suitable reaction extent. In some non-limiting embodiments, the amidation reaction is substantially over when the acid number or amine number less than 4 mg KOH/gm. The acid number may preferably be reduced by use of any suitable acid scavenger. The acid scavenger may be a carbonate scavenger. More particularly, the scavenger may be an alkylene carbonate. Non-limiting examples of suitable alkylene carbonates include C2 to C10 alkylene carbonates, non-limiting examples of which include ethylene carbonate, propylene carbonate and butylene carbonate. As a particular non-limiting example, the acid number may preferably be reduced to less than 1 by treatment with 4 equivalents of alkylene carbonate based on the residual acid content. This treatment with an acid scavenger may be utilized to avoid excess foaming, or to control the rate of foaming, in any subsequent reaction of the polyamide diol with diisocyanate. Certainly, there may be instances where foaming is desired.

The polyamide diol of the present invention is useful as a material for the making of polyurethanes. Non-limiting examples of polyurethanes include those described below, as well as any others which may be made from the present polyamide diol. The polyamide polyol of the present invention finds utility in a wide variety of uses as are known for polyamides, polyols, and polyurethanes (including those polyurethane uses described below for the polyurethanes of the present invention). Non-limiting examples of utilities include leather finishing, thermoplastic compositions for injection molding and extrusion, engineered components, flooring, alkyds, rosin tackifiers, lubricants, cosmetics, fuel additives, plasticizers, synthetic waxes, detergents, metalworking, hydraulic fluids, heat transfer fluids, antifoams, demulsifiers, and polyurethane CASE applications, coatings, adhesives, sealants and elastomers. The present disclosure is directed to such products made from the present polyamide diol, and to methods of making and using such products.

Polyurethanes

The present invention also includes polyurethanes represented by the following EQN 7:

OCN-R4-N-(C=O)-P-[(C=O)-N-R4-N-(C=O)-P]ₘ-(C=O)-N-R4-NCO (EQN. 7)

m is the number of repeating units, and is at least 1, with its upper limit merely limited by the type of polyurethane desired. In some non-limiting embodiments, m will generally range on the low end from 1, 10, or 35, and on the high end to 50, 100, 300, 1000, or 10,000. Non-limiting examples of suitable ranges include from 1 to 50, from 1 to 100, and from 1 to 300. Of course, where desired, n may be greater then 10,000.

R4 may be generally described as a hydrocarbon group, with optional substitution of the carbon and hydrogen atoms. The carbon atoms of R4 may be linear, branched or cyclic. R4 is preferably an alkyl or cycloalkyl group. R4 may be saturated or unsaturated. If cyclic R4 may have some degree of aromaticity. The number of carbon atoms in R4 will range on the low end from 2, 4, or 6 and on the high end to 10, 50, or 100. Non-limiting examples of suitable ranges of carbon atoms in R4 include 2 to 10, 2 to 50, and 2 to 100. Any desired suitable substitution may be made, non-limiting examples of which include substitution of any hydrogen with halogen, and/or substitution of any carbon with oxygen or nitrogen. Optionally, R4 may contain halogen substitution of one or more hydrogen atoms. Each R4 is independently selected and may be the same or different.

P is a repeating unit version of the polyamide diol of EQN. 1 less the end hydrogen atoms. It should be understood that for each occurrence of P in EQN. 7, P is independently selected and may be the same or different.

Polyurethanes as a class of polymer are well known in the art. As is very well known in the art, polyurethanes are commonly prepared by reaction of a diisocyanate and a polyol.

It should be understood that when at least one T of EQN. 1 is X-R1 -(C=O) that P is a polyamide diol. When each T is H, then a polyamide is formed. Of course, P may in some non-limiting embodiments be a mixture of polyamide diol with polyamide. Reaction of the polyol with diisocyanate will result in a polyurethane. Reaction of the polyamide with diisocyanate will result in a polyurea. Further embodiments of this invention are directed to compositions of a polyurethane, compositions of polyurea, and to compositions comprising both the polyurethane and polyurea.

In a non-limiting emodiment of a method of the present invention, a polyurethane of EQN. 7 is obtained by reacting a diisocyanate with the polyamide diol of EQN. 1.

Exemplary suitable polyisocyanate compounds useful for preparing a polyurethane base resin for use in the present invention include aromatic, aliphatic, cycloaliphatic, and aralkyl polyisocyanate compounds containing from 6 to 100 carbon atoms. The term "aliphatic polyisocyanate" as used herein includes any organic polyisocyanate compound in which the isocyanate groups are attached to saturated carbon atoms. Preferably, the polyisocyanate compound employed contains two isocyanate groups, however, polyisocyanate compounds containing greater than two isocyanate groups are suitable for use in preparing the polyurethane resin of the invention providing that the resulting urethane compound is a liquid or thermoplastic solid. A mixture or a blend of more than one polyisocyanate compound may also be employed. In other embodiments, polymers (dimers or greater) of polyisocyanate compounds may be utilized.

The following polyisocyanate compounds are exemplary suitable compounds for use in the invention: 4,4'-diphenylmethane diisocyanate; 2,4'-diphenylmethane diisocyanate; toluene-2,4-diisocyanate; toluene-2,6-diisocyanate; 3-phenyl-2-ethylenediisocyanate; 1,5-naphthalene diisocyanate; 1,8-naphthalene diisocyanate; cumene-2,4-diisocyanate; 4-methyoxy-1,3-phenylene diisocyanate; 4-chloro-1,3-phenylenediisocyanate; 4-bromo-1,3-phenylene diisocyanate; 4-ethyloxy-1,3-phenylenediisocyanate; 2,4'-diisocyanatodiphenyl ether; 5,6-dimethyl-1,3-phenylenediisocyanate; 2,4-dimethyl-1,3-phenylenediisocyanate; 4,4'-diisocyanatodiphenyl ether; benzidinediisocyanate; 4,6-dimethyl-1,3-phenylenediisocyanate;9,10-anthracenediisocyanate; 4,4'-diisocyanatodibenzyl; 3,3'-dimethyl-4,4'-diisocyanatodiphenylmethane; 2,6-dimethyl-4,4'-diisocyanatodiphenyl; 2,4-diisocyanatostilbene; 3,3'-dimethyl-4,4'-diisocyanatodiphenyl; 3,3'-dimethoxy-4,4'-diisocyanatodiphenyl; 1,4-anthracenediisocyanate; 2,5-fluorenediisocyanate; 1,3-phenylenediisocyanate; 1,4-phenylenediisocyanate; 2,6-diisocyanatobenzylfuran; bis(2-isocyanatoethyl)fumarate; bis(2-isocyanatoethyl)carbonate; bis(2-isocyanatoethyl)-4-cyclohexene-1,2-dicarboxylate; polymethylene polyphenyl isocyanate; 1,4-tetramethylenediisocyanate; 1,6-hexamethylenediisocyanate; 1,10-decamethylenediisocyanate; 1,3-cyclohexylenediisocyanate; 1,4-cyclohexylenediisocyanate; 4,4'-methylene-bis(cyclohexylisocyanate); m- and p-tetramethylxylene diisocyanate; 2,2,4-trimethyl-1,6-hexamethylene diisocyanate; m- and p-xylylene diisocyanate; 3-isocyanatomethyl-3,5,5-trimethylcyclohexyl isocyanate; phenylene bis(2-ethyl isocyanate); 4-methyl-1,3-cyclohexylene diisocyanate; 2-methyl-1,3-cyclohexylene diisocyanate; 2,4'-methylene bis(cyclohexylisocyanate); lower alkyl esters of 2,5-diisocyanatovaleric acid; and polyisocyanates containing three or more isocyanate groups per molecule such as triphenylmethane triisocyanate and 2,4-bis(4-isocyanatocyclohexylmethyl)cyclohexyl isocyanate, and mixtures and polymers thereof.

Preferred polyisocyanate compounds include 4,4'-diphenylmethane diisocyanate; 2,4'-diphenylmethane diisocyanate; toluene-2,4-diisocyanate; toluene-2,6-diisocyanate; 1,6-hexamethylenediisocyanate; and 3-isocyanatomethyl-3,5,5-trimethylcyclohexyl isocyanate.

More preferred polyisocyanate compounds include 4,4'-diphenylmethane diisocyanate; 2,4'-diphenylmethane diisocyanate; toluene-2,4-diisocyanate; and toluene-2,6-diisocyanate.

In the method of the present invention, the polyol component for the polyurethane reaction will include the polyamide diol of EQN. 1, and may optionally include other polyols as are commonly utilized in the manufacture of polyurethanes.

The optional polyols which may be included with the polyamide diols include polyacrylic polyols, polyester polyols, polyether polyols, polyamide diols, polycarbonate polyols, polyesteramide polyols, polythioether polyols, polyacetal polyols, polyurethane polyols, polybutadiene polyols or copolymers with acrylonitrile or styrene for example, castor oil and its derivatives and any monomeric polyols such as ethylene glycol, 1,2-propylene glycol, diethylene glycol, triethylene glycol, dipropylene glycol, trimethylene glycol, 1,3- and 1,4-butane diol; hexamethylene glycol, neopentyl glycol, glycerin, trimethylolpropane and pentaerythritol.

Polyurethane can be made in a variety of densities and hardnesses by varying the type of monomer(s) used and adding other substances to modify their characteristics, notably density, or enhance their performance. As with other polymers, any number of additives may be used to improve the fire performance, stability in difficult chemical environments and other properties of the polyurethane products.

Though the properties of the polyurethane are determined mainly by the choice of polyol, the diisocyanate exerts some influence. The cure rate is influenced by the functional group reactivity and the number of functional isocyanate groups. The mechanical properties are influenced by the functionality and the molecular shape. The choice of diisocyanate also affects the stability of the polyurethane upon exposure to light. Polyurethanes made with aromatic diisocyanates yellow with exposure to light, whereas those made with aliphatic diisocyanates are stable.

The precise formulation of the polyurethane adhesive or sealant composition of the present invention will vary depending upon the specific end use. Other ingredients may also be incorporated into the adhesive or sealant composition as dictated by the nature of the desired composition as well known by those having ordinary skill in the art.

While the adhesive or sealant compositions may be used directly as described above, if desired the adhesive or sealant compositions of the present invention may also be formulated with conventional additives as are known in the art, non-limiting examples of which include plasticizers, compatible tackifiers, catalysts, fillers, anti-oxidants, pigments, mercapto/silane adhesion promoters, stabilizers and the like. The adhesive or sealant compositions are readily prepared using methods generally known in the art.

The resultant polyurethanes are useful in applications as are well known for prior art polyurethanes. The resultant polyurethanes may be formulated into thermoplastic polyurethanes or thermoset polyurethanes. As non-limiting examples, the polyurethanes of the present invention (as well as the above described polyamide diols) may be useful in the making of flexible and rigid foams, elastomers, cast elastomers, sealants, textiles, fibers, gaskets, binders, coatings, linings, adhesives, molded products, paints, plastic compositions with other plastics, packaging, RIM products, molded products, spandex, construction materials, furniture, carpeting, carpet cushion, bedding, footwear, decorative materials, millable gums, mine reinforcements, CASE applications, just to name a few. The present disclosure is directed to such products made from the present polyurethanes (as well as the present above described polyamide diol), and to methods of making and using such products.

Some embodiments of the resultant polyurethanes will provide a moisture curable adhesive with good tack, green strength, open time, and/or good adhesion after curing to substrates used in large scale lamination or profile wrap application. Some embodiments of the resultant polyurethane exhibit good adhesion to substrates like ABS, Poly(Acrylonitrile Butadiene Styrene). The present invention is also believed to have utility in adhesion to or with other polymers such as, PVC, polyacrylics, polyolefins (C2 to C8 homopolymers, copolymers thereof, and mixtures thereof), such as polyethylene and polypropylene, and any polymer compositions containing at least one of the same.

In another non-limiting method embodiment of the present invention, products may be produced by application of the polyurethane adhesive to a substrate.

As non-limiting examples, the resulting adhesive or sealant compositions, when appropriately formulated, may be used as hot melt adhesives in virtually any packaging application in which adhesive or sealant compositions are commonly employed with a substrate, including case and carton forming and sealing, tube winding, bag manufacture, glued lap, paper and flexible film laminating. Blocked isocyanates may improve shelf life of these adhesive or sealant compositions. Non-limiting examples of isocyanates may include HDI, IPDI TDI TmXDI, and MDI. Non-limiting examples of suitable blocking agents include alcohols, lactams, cetoxims and active methylene group compounds. The substrates will have applied to a portion thereof the adhesive composition. Depending on the particular application, the substrate may have substantially all of one surface coated, or may be coated on two sides. Alternately, the adhesive or sealant composition may be applied as a bead, whereby a minor portion of the substrate has applied thereto the adhesive. One skilled in the art, having the knowledge of the present specification, will readily ascertain those applications in which the use of the inventive adhesive or sealant compositions would be advantageous. Any conventional method of applying the adhesive or sealants to the particular substrates may be employed. These methods are well known in the field of adhesives or sealants.

EXAMPLES

The following non-limiting Examples are provided merely to illustrate a few embodiments of the invention, and are not meant to and do not limit the scope of the claims.

Examples 1-5, Preparation of Polyamide diol

In the examples, "EDA" means ethylene diamine, "Cenwax^{®} A" means 12-hydroxystearic acid, "D-2000" means polyoxypropylenediamine with a molecular weight of about 2000, "D-400" means polyoxypropylenediamine with a molecular weight of about 400, "Unitol^{®} BKS" means tall oil fatty acid, "Century 1224" means stearic acid, "Unitol 1 8" is a dimer acid, "prop. carb." means propylene carbonate, "ODS" means Anox ODS antioxidant, and "20" means Anox 20 antioxidant.

The reactants listed in Table 1 below were charged to a 3000 mL vessel and heated gradually with stirring to a maximum reaction temperature of about 220°C. The reactants were held at that temperature for about 8 hours under a mild stream of dry nitrogen. Water was distilled off as it was formed. After the 8 hour hold, the reaction was judged to be sufficiently complete as determined by acid number measurement of samples (3 to 4). Next, four equivalents of propylene carbonate based on the acid number were added to the flask and the reaction was held at 220C for 1 to 2 additional hours. Analysis of a new sample confirmed that the acid number was below 1. The flask was evacuated to a vacuum of about 29 inches of mercury below atmospheric pressure and held there for 1 hour to remove any unreacted propylene carbonate and other volatiles. The final antioxidants were added and allowed to dissolve for 15 minutes. Then the resin was poured into cans to cool to an amber soft solid.

Results are provided in Table 1 below.

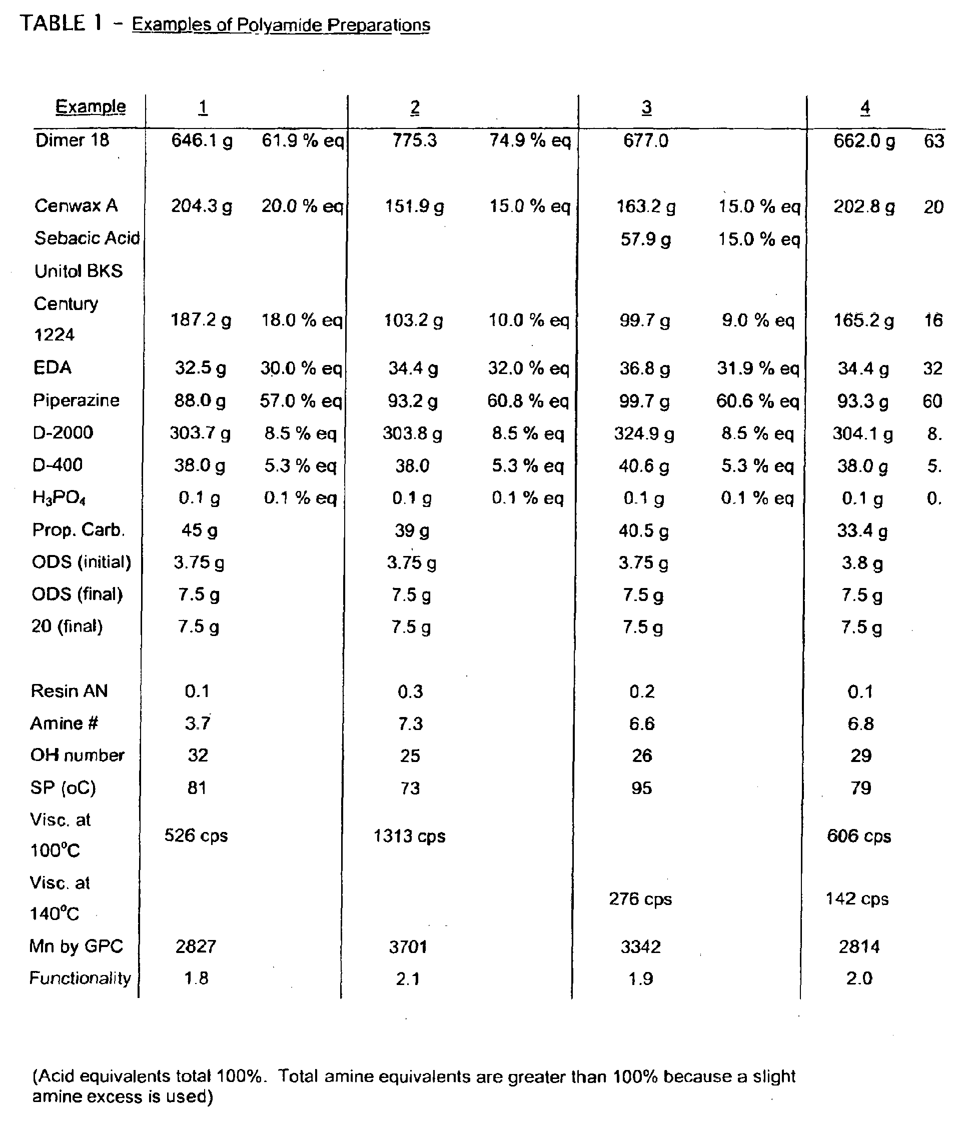

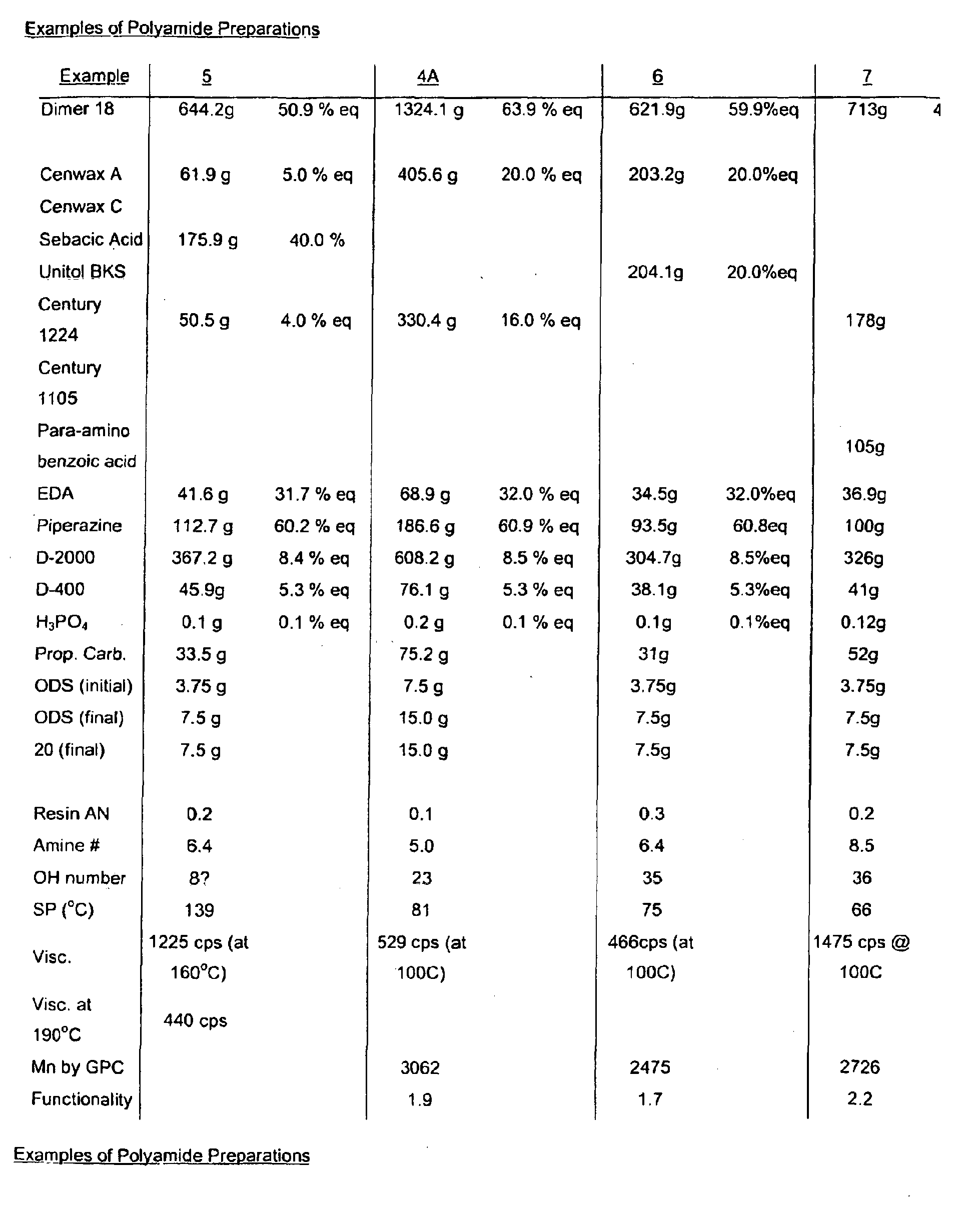

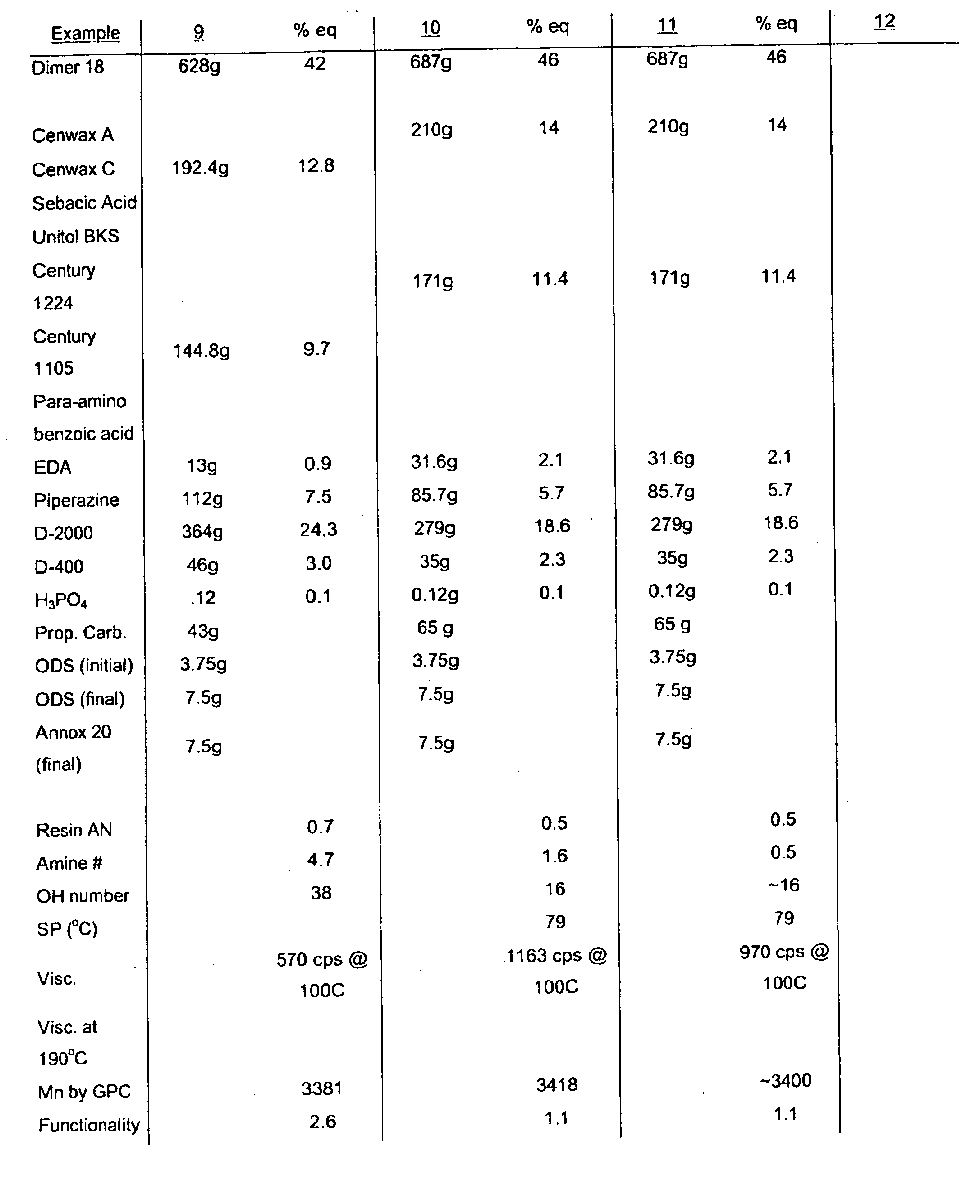

Examples 6-9, Preparation of Polyurethane Adhesive

The polyamide diol formulations of Examples 1-5 were used to make polyurethane adhesives.

"PPG 2000" is polypropylene glycol with an average molecular weight of 2000, "Rubinate 9433" is MDI high in the 2,4' isomer available from Huntsman, "Isonate 125M" is a 98% pure 4,4'-MDI available from Dow Chemical, "Modaflow 2100" is a flow modifier available from Cytech, "Dynacoll 7360" is a polyester polyol from Degussa with an OH # of about 30 and a molecular weight of 3500.

Formulations are shown in Table 2 below. A polyol mixture is made by melting a mixture of the PPG 2000, selected polyamide diol of Examples 1-5, and the other polyol (Dynacoll 7360, Dynacoll 7380 or Dianal MB-3068) in a stirred flask at 100C. Next, the Modaflow 2100 is added and the flask is evacuated to a vacuum of 29 inches of mercury to remove traces of water. Then the flask is vented with nitrogen and the MDI added. The reaction is stirred at for one hour (at 100-105C for Ex. 1-4 and 4A, and at 120-130C for the remaining examples) under a partial vacuum to remove bubbles. The resulting isocyanate terminated polyurethane is coated onto substrates for adhesive testing.

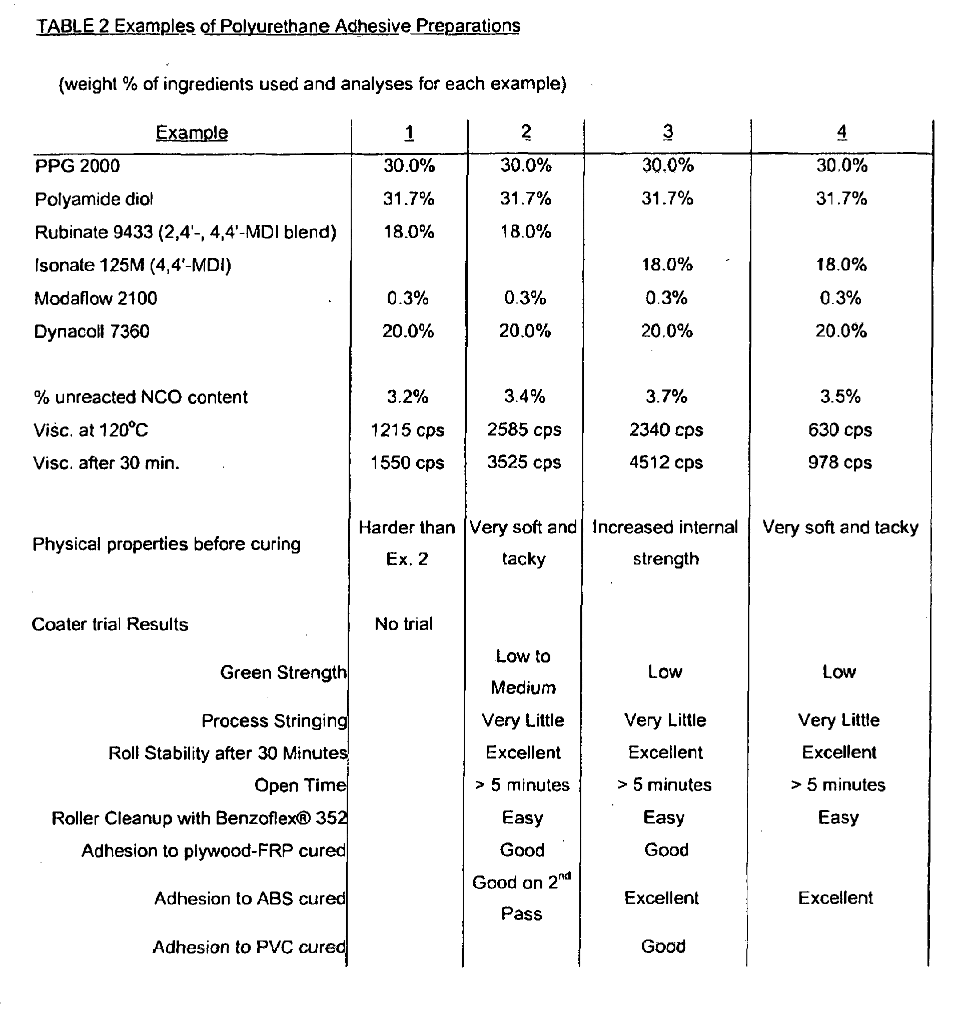

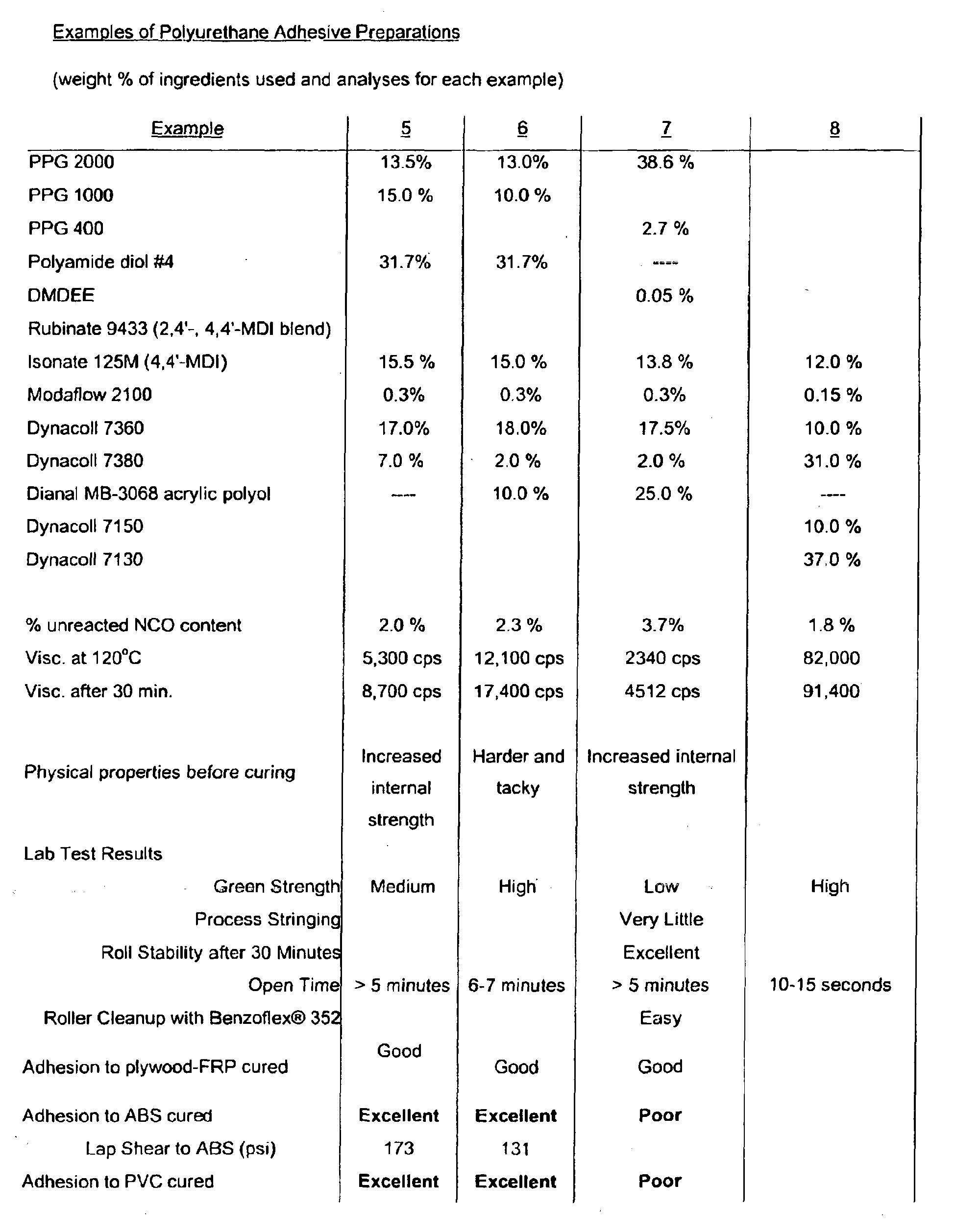

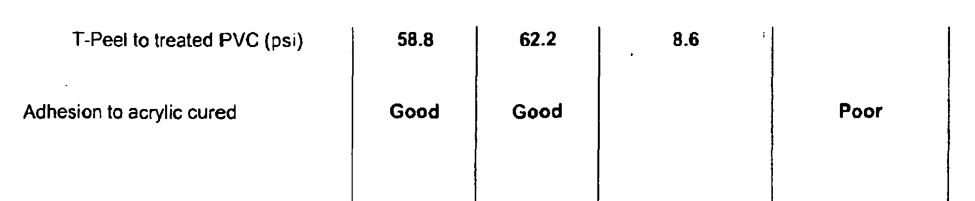

This table compares polyamide diol polyurethane #5, mixed polyamide diol / acrylic polyol polyurethane #6, and, as controls, an acrylic polyol polyurethane #7 and a polyester polyol polyurethane #8. Polyurethanes #5 and #6 show increased adhesion to the ABS, PVC, and acrylic substrates compared to the one of the controls both in subjective testing and in the numerical measurements we have been doing (in progress).

Therefore, we want to emphasize that our polyamide diol can provide increased adhesion to low energy substrates like ABS, PVC, or the acrylic film. A formulation like #8 is currently used commercially as an adhesive for acrylics in profile wrap applications, but the acrylics must be pretreated (with for example, a solvent) to get the adhesion. Polyurethanes containing our product show the good adhesion without substrate pretreatment. Note that our polyamide diol can either be used to replace a competitive technology like acrylic polyols or can be used with them to enhance their adhesive properties (weight % of ingredients used and analyses for each example)
EMX-21 is a proprietary commercial acrylic polyol based PUR adhesive made by FasTech Inc. EMX-21 is similar in composition to example 7 in Table 2.

| PUR Formulation | 4A | 5A | 9 | FasTech EMX-21* |
|---|---|---|---|---|
| PPG 2000 | 30.0% | 14.0% | 13.0% | |
| PPG 1000 | | 15.0% | 15.0% | |
| PPG 400 | | | | |
| Polyamide diol #4A | 31.7% | 31.7% | 26.7% | none |
| DMDEE | | | | |
| Rubinate 9433 (2,4'-, 4,4'-MDI blend) | | | | |
| Isonate 125M (4,4'-MDI) | 18.0% | 16.0% | 16.0% | yes |
| Modaflow 2100 | 0.3% | 0.3% | 0.3% | |
| Dynacoll 7360 | 20.0% | 17.0% | 17.0% | |
| Dynacoll 7380 | | 7.0% | 7.0% | |
| Dianal MB-3068 acrylic polyol | | | 5.0% | yes |
| Dynacoll 7150 | | | | |
| Dynacoll 7130 | | | | |
| | | | | |
| % unreacted NCO content | 3.2% | 2.0% | 2.3% | |
| Visc. at 120°C (cps) | 2645 | 5300 | 3850 | 10,000 cps |
| Visc. after 30 min. (cps) | 6100 | 8700 | 6260 | |

All publications cited herein, including but not limited to, patent related publications such as U.S. and foreign patents, U.S. and foreign applications, and non-patent publications such as books, articles, magazines, journals, dissertations, presentations, speeches, newspapers, are herein incorporated by reference for all that they teach and disclose.

The present invention has been illustrated mainly by reference to polyamide diols. However, the present invention should be broadly understood in terms of any suitable polyamide polyol in place of the polyamide diol. So the present invention relates to polyamide diol compositions, to method of making and use thereof, and to products made therefrom, and to polyurethanes made therefrom.

### THE FOLLOWING STATEMENTS DESCRIBE SOME EMBODIMENTS OF THE INVENTION

According to one embodiment of the present invention there is provided a method of making a polyol, the method comprising:
contacting a diamine, dicarboxylic acid and a hydroxy substituted carboxylic acid together under conditions sufficient to form the polyol,
wherein the diamine comprises polymeric diamines and non-polymeric diamines.

The polyol may e.g. be a polyamide diol and is represented by the formula:

T-[Z-(C=4)-R2-(C=O)]ₙ-Z-T

wherein n is at least 1; each T independently is selected, may be the same or different, and is X-R1-(C=O); each X is independently selected, may be the same or different and is H or OH; each R1 is independently selected, may be the same or different, and is a hydrocarbon group having from 2 to 54 carbon atoms; each R2 is independently selected, may be the same or different, and is a hydrocarbon group having from 2 to 54 carbon atoms; and Z is a pair of N atoms joined by a hydrocarbon link.

The polymeric diamine may e.g. comprise polyoxyalkylenediamine, and the non-polymeric diamine comprises at least one selected from the group consisting of ethylene diamine, 1,2-diaminopropane, 1,3-diaminopropane, 1,4-diaminobutane, p-xylene diamine, 1,6-hexamethylene diamine, 2,-methylpentamethylene diamine, 4,4'-methylenebis(cyclohexylamine), 1,2-diamino-2-methylpropane, 1,5-diaminopentane, 2,2-dimethyl-1,3-propanediamine, 2-methyl-1,5-pentanediamine, 1,7-diaminoheptane, 1,8-diaminooctane, 2,5-dimethyl-2,5-hexanediamine, 1,9-diaminononane, 2,2-di-(4- cyclohexylamine)propane, polyglycol diamines, isophorone diamine, m-xylene diamine, cyclohexanebis(methylamine), bis-1,4-(2'-aminoethyl) benzene, 9-aminomethylstearylamine, 10-aminoethylstearylamine; 1,3-di-4-piperidyl propane, 1,10-diaminodecane, 1,12-diaminododecane, 1,18-diaminooctadecane, piperazine, N-aminoethylpiperazine, bis-(3-aminopropyl)piperazine, polyethylene polyamines such as diethylene triamine and triethylene tetramine, diethyltoluene diamine, methylene dianiline and bis (aminoethyl) diphenyl oxide.

The dicarboxylic acid may e.g. comprise at least one selected from the group of lower alkyl dicarboxylic acids consisting of oxalic, glutaric, malonic, adipic, succinic, suberic, sebacic, azelaic, dodecanedioic, pimelic, terephthalic, iosphthalic, phthalic, napthalene, dicarboxylic acids and 1,4- or 1,3-cyclohexane dicarboxylic acids, and at least one selected from the group of fatty acid dicarboxylic acids selected from the group consisting of C28 to C44 dicarboxylic acids.

The hydroxy substituted carboxylic acid may e.g. comprise at least one selected from the group consisting of 12-hydroxy stearic acid, glycolic acid, lactic acid, 2-hydroxybutyric acid, 3-hydroxybutyric acid, 3-hydroxybenzoic acid, 4-hydroxybenzoic acid, 2-hydroxycinnamic acid, 3-hydroxycinnamic acid, 10-hydroxydecanoic acid, 2-hydroxy-3,3-dimethylbutyric acid, 9-hydroxy-9-fluorenecarboxylic acid, 16-hydroxyhexadecanoic acid, 2-hydroxyhexanoic acid, alpha-hydroxyisobutyric acid, 2-hydroxyisocaproic acid, alpha-hydroxyisovaleric acid, 3-hydroxymandelic acid, and 9-hydroxynonanoic acid; and, 4-hydroxyphenylacetic acid.

The dicarboxylic acid may e.g. comprise at least one selected from the group of lower alkyl dicarboxylic acids consisting of 1,6-hexanedioic acid (adipic acid), 1,7-heptanedioic acid (pimelic acid), 1,8-octanedioic acid (suberic acid), 1,9-nonanedioic acid (azelaic acid), or 1,10-decanedioic acid (sebacic acid); and at least one selected from the group of fatty acid dicarboxylic acids selected from the group consisting of C32 to C40 dicarboxylic acids.

The hydroxy substituted carboxylic acid may e.g. comprise at least one selected from the group consisting of 12-hydroxy stearic acid, and lithocholic acid.

The dicarboxylic acid may e.g. comprise at least one selected from the group of lower alkyl dicarboxylic acids consisting of 1,6-hexanedioic acid (adipic acid), 1,7-heptanedioic acid (pimelic acid), 1,8-octanedioic acid (suberic acid), 1,9-nonanedioic acid (azelaic acid), or 1,10-decanedioic acid (sebacic acid); and a C36 dicarboxylic acid.

The hydroxy substituted carboxylic acid may e.g. comprise 12-hydroxy stearic acid.

The dicarboxylic acid may e.g. comprise 1,10-decanedioic acid (sebacic acid) and C36 dicarboxylic acid.

The polymeric diamine may e.g. comprise polyoxyalkylenediamine, and the non-polymeric diamine comprises at least one selected from the group consisting of ethylenediamine, hexamethylenediamine, piperazine, m-xylenediamine, 1,2-diamino-2-methylpropane, 1,5-diaminopentane, 2,2-dimethyl-1,3-propanediamine, 2-methyl-1,5-pentanediamine, 1,7-diaminoheptane, 1,8-diaminooctane, 2,5-dimethyl-2,5-hexanediamine, N-aminoethylpiperazine, and 1,9-diaminononane.

The dicarboxylic acid may e.g. comprise at least one selected from the group of lower alkyl dicarboxylic acids consisting of oxalic, glutaric, malonic, adipic, succinic, suberic, sebacic, azelaic, dodecanedioic, pimelic, terephthalic, isophthalic, phthalic, napthalene dicarboxylic acids and 1,4- or 1,3-cyclohexane dicarboxylic acids, and at least one selected from the group of fatty acid dicarboxylic acids selected from the group consisting of C28 to C44 dicarboxylic acids.

The hydroxy substituted carboxylic acid may e.g. comprise at least one selected from the group consisting of 12-hydroxyl stearic acid, glycolic acid, lactic acid, 2-hydroxybutyric acid, 3-hydroxybutyric acid, 3-hydroxybenzoic acid, 4-hydroxybenzoic acid, 2-hydroxycinnamic acid, 3-hydroxycinnamic acid, 10-hydroxydecanoic acid, 2-hydroxy-3,3-dimethylbutyric acid, 9-hydroxy-9-fluorenecarboxylic acid, 16-hydroxyhexadecanoic acid, 2-hydroxyhexanoic acid, alpha-hydroxyisobutyric acid, 2-hydroxyisocaproic acid, alpha-hydroxyisovaleric acid, 3-hydroxymandelic acid, and 9-hydroxynonanoic acid; and, 4-hydroxyphenylacetic acid.

The dicarboxylic acid may e.g. comprise at least one selected from the group of lower alkyl dicarboxylic acids consisting of 1,6-hexanedioic acid (adipic acid), 1,7-heptanedioic acid (pimelic acid), 1,8-octanedioic acid (suberic acid), 1,9-nonanedioic acid (azelaic acid), or 1,10-decanedioic acid (sebacic acid); and at least one selected from the group of fatty acid dicarboxylic acids selected from the group consisting of C32 to C40 dicarboxylic acids.

The hydroxy substituted carboxylic acid may e.g. comprise at least one selected from the group consisting of 12-hydroxy stearic acid, and lithocholic acid.

The dicarboxylic acid may e.g. comprise at least one selected from the group of lower alkyl dicarboxylic acids consisting of 1,6-hexanedioic acid (adipic acid), 1,7-heptanedioic acid (pimelic acid), 1,8-octanedioic acid (suberic acid), 1,9-nonanedioic acid (azelaic acid), or 1,10-decanedioic acid (sebacic acid); and comprises a C36 dicarboxylic acid.

The hydroxy substituted carboxylic acid may e.g. comprise 12-hydroxy stearic acid.

The dicarboxylic acid may e.g. comprise 1,10-decanedioic acid (sebacic acid) and C36 dicarboxylic acid.

The polymeric diamine may e.g. comprise polyoxypropylenediamines diamine and the non-polymeric diamine comprises piperazine.

The dicarboxylic acid may e.g. comprise at least one selected from the group of lower alkyl dicarboxylic acids consisting of oxalic, glutaric, malonic, adipic, succinic, suberic, sebacic, azelaic, dodecanedioic, pimelic, terephthalic, isophthalic, phthalic, napthalene dicarboxylic acids and 1,4- or 1,3-cyclohexane dicarboxylic acids, and at least one selected from the group of fatty acid dicarboxylic acids selected from the group consisting of C28 to C44 dicarboxylic acids.

The hydroxy substituted carboxylic acid comprises at least one selected from the group consisting of 12-hydroxy stearic acid, glycolic acid, lactic acid, 2-hydroxybutyric acid, 3-hydroxybutyric acid, 3-hydroxybenzoic acid, 4-hydroxybenzoic acid, 2-hydroxycinnamic acid, 3-hydroxycinnamic acid, 10-hydroxydecanoic acid, 2-hydroxy-3,3-dimethylbutyric acid, 9-hydroxy-9-fluorenecarboxylic acid, 16-hydroxyhexadecanoic acid, 2-hydroxyhexanoic acid, alpha-hydroxyisobutyric acid, 2-hydroxyisocaproic acid, alpha-hydroxyisovaleric acid, 3-hydroxymandelic acid, and 9-hydroxynonanoic acid; and, 4-hydroxyphenylacetic acid.

The dicarboxylic acid may e.g. comprise at least one selected from the group of lower alkyl dicarboxylic acids consisting of 1,6-hexanedioic acid (adipic acid), 1,7-heptanedioic acid (pimelic acid), 1,8-octanedioic acid (suberic acid), 1,9-nonanedioic acid (azelaic acid), or 1,10-decanedioic acid (sebacic acid); and at least one selected from the group of fatty acid dicarboxylic acids selected from the group consisting of C32 to C40 dicarboxylic acids.

The hydroxy substituted carboxylic acid may e.g. comprise at least one selected from the group consisting of 12-hydroxy stearic acid, and lithocholic acid.

The dicarboxylic acid may e.g. comprise at least one selected from the group of lower alkyl dicarboxylic acids consisting of 1,6-hexanedioic acid (adipic acid), 1,7-heptanedioic acid (pimelic acid), 1,8-octanedioic acid (suberic acid), 1,9-nonanedioic acid (azelaic acid), or 1,10-decanedioic acid (sebacic acid); and a C36 dicarboxylic acid.

The hydroxy substituted carboxylic acid may e.g. comprise 12-hydroxy stearic acid.

The dicarboxylic acid may e.g. comprise 1,10-decanedioic acid (sebacic acid) and a C36 dicarboxylic acid.

According to a second embodiment of the invention there is provided a polyamide diol composition represented by the formula

T-[Z-(C=O)-R2-(C=O)]ₙ-Z-T

wherein n is at least 1; each T independently is selected, may be the same or different, and is X-R1-(C=O); each X is independently selected, may be the same or different and is H or OH; each R1 is independently selected, may be the same or different, and is a hydrocarbon group having from 2 to 54 carbon atoms; each R2 is independently selected, may be the same or different, and is a hydrocarbon group having from 2 to 54 carbon atoms; Z is of the form NLN, a pair of nitrogen atoms joined by a hydrocarbon link L, L may be a hydrocarbon group between the nitrogen atoms, or it may be a cyclical hydrocarbon group into which at least one of the nitrogen atoms is incorporated therein, and wherein at least 1 but less than all Z groups comprises a polyoxyalkyl group.
L may e.g. comprise in the range of 2 to 200 carbon atoms.
R1 may e.g. comprise in the range of 4 to 36 carbon atoms.
R1 may e.g. comprise in the range of 6 to 18 carbon atoms.
R1 may e.g. comprise 18 carbon atoms.
At least one R2 may e.g. comprise in the range of 2 to 12 carbon atoms, and at least one R2 may e.g. comprise in the range of 28 to 44 carbon atoms.
R1 may e.g. comprise in the range of 4 to 36 carbon atoms.
R1 may e.g. comprise in the range of 6 to 18 carbon atoms.
R1 may e.g. comprise 18 carbon atoms.
At least one R2 may e.g. comprise 10 carbon atoms, and at least one R2 may e.g. comprise 36 carbon atoms.
R1 may e.g. comprise in the range of 4 to 36 carbon atoms.
R1 may e.g. comprise in the range of 6 to 18 carbon atoms.
R1 may e.g. comprise 18 carbon atoms.

According to a third embodiment of the present invention there is provided a polyurethane composition represented by the formula

OCN-R4-N-(C=O)-P-[(C=O)-N-R4-N-(C=O-P]ₘ-(C=O)-N-R4-NCO

wherein m is at least 1; each R4 is independently selected, may be the same or different, and is a C2 to C100 hydrocarbon group; each P is independently selected, may be the same or different, and is a polyamide diol represented by the formula

T-[Z-(C=O)-R2-(C=O)]ₙ-Z-T

wherein n is at least 1; each T independently is selected, may be the same or different, and is X-R1-(C=O); each X is independently selected, may be the same or different and is H or OH; each R1 is independently selected, may be the same or different, and is a hydrocarbon group having from 2 to 54 carbon atoms; each R2 is independently selected, may be the same or different, and is a hydrocarbon group having from 2 to 54 carbon atoms; and Z is of the form NLN, a pair of nitrogen atoms joined by a hydrocarbon link L, L may be a hydrocarbon group between the nitrogen atoms, or it may be a cyclical hydrocarbon group into which at least one of the nitrogen atoms is incorporated therein.
L may e.g. comprise in the range of 2 to 200 carbon atoms.
R1 may e.g. comprise in the range of 4 to 36 carbon atoms; and wherein R4 comprises in the range of 2 to 100 carbon atoms.
R1 may e.g. comprise in the range of 6 to 18 carbon atoms.
R1 may e.g. comprise 18 carbon atoms.
At least one R2 may comprise in the range of 2 to 12 carbon atoms, and at least one R2 may e.g. comprise in the range of 28 to 44 carbon atoms; and wherein R4 comprises in the range of 2 to 50 carbon atoms.
R1 may e.g. comprise in the range of 4 to 36 carbon atoms.
R1 may e.g. comprise in the range of 6 to 18 carbon atoms.
R1 may e.g. comprise 18 carbon atoms.
At least one R2 may e.g. comprise 10 carbon atoms, and at least one R2 comprises 36 carbon atoms; and R4 may e.g. comprise in the range of 2 to 25 carbon atoms.
R1 may e.g. comprise in the range of 4 to 36 carbon atoms.
R1 may e.g. comprise in the range of 6 to 18 carbon atoms.
According to a fourth embodiment of the present invention, there is a provided a method of making polyurethane of the present invention comprising contacting a diisocyanate and a polyamide diol together under conditions sufficient to form a polyurethane.
The diisocyanate may e.g. comprise at least one selected from the group consisting of 4,4'-diphenylmethane diisocyanate; 2,4'-diphenylmethane diisocyanate; toluene-2,4-diiosocyanate; toluene-2,6-diisocyanate; 3-phenyl-2-ethylenediisocyanate; 1,5-naphthalene diisocyanate; 1,8-naphthalene diisocyanate; cumene-2,4-diisocyanate; 4-methyoxy-1,3-phenylene diisocyanate; 4-chloro-1,3-phenylenediisocyanate; 4-bromo-1,3-phenylene diisocyanate; 4-ethyloxy-1,3-phenylenediisocyanate; 2,4'-diisocyanatodiphenyl ether; 5,6-dimethyl-1,3-phenylenediisocyanate; 2,4-dimethyl-1,3-phenylenediisocyanate; 4,4'-diisocyanatodiphenyl ether; benzidinediisocyanate; 4,6-dimethyl-1,3-phenylenediisocyanate; 9,10-anthracenediisocyanate; 4,4'-diisocyanatodibenzyl; 3,3'-dimethyl-4,4'-diisocyanatodiphenylmethane; 2,6-dimethyl-4,4'-diisocyanatodiphenyl; 2,4-diisocyanatostilbene; 3,3'-dimethyl-4,4'-diisocyanatodiphenyl; 3,3'-dimethoxy-4,4'-diisocyanatodiphenyl; 1,4-anthracenediisocyanate; 2,5-fluorenediisocyanate; 1,3-phenylenediisocyanate; 1,4-phenylenediisocyanate; 2,6-diisocyantobenzylfuran; bis(2-isocyanatoethyl)fumarate; bis (2-isocyanatoethyl) carbonate; bis (2-isocyanatoethyl)-4-cyclohexene-1,2-dicarboxylate; polymethylene polyphenyl isocyanate; 1,4-tetramethylenediisocyanate; 1,6-hexamethylenediisocyanate; 1,10-decamethylenediisocyanate; 1,3-cyclohexylenediisocyanate; 1,4-cyclohexylenediisocyanate; 4,4'-methylene-bis (cyclohexylisocyanate) ; m- and p-tetramethylxylene diisocyanate; 2,2,4-trimethyl-1,6-hexamethylene diisocyanate; m- and p-xylylene diisocyanate; 3-isocyanatomethyl-3,5,-trimethylcyclohexyl isocyanate; phenylene bis(2-ethyl isocyanate); 4-methyl-1,3-cyclohexylene diisocyanate; 2-methyl-1,3-cyclohexylene diisocyanate; 2,4'-methylene bis(cyclohexylisocyanate); lower alkyl esters of 2,5-diisocyanatovaleric acid; and polyisocyanates containing three or more isocyanate groups per molecule such as triphenylmethane triisocyanate and 2,4-bis(4-isocyanatocyclohexylmethyl)cyclohexyl isocyanate, and mixtures and polymers thereof.
The polyurethane may e.g. be of the formula

OCN-R4-N-(C=O)-P-[(C=O)-N-R4-N-(C=O-P]ₘ-(C=O)-N-R4-NCO

wherein m is the number of repeating units; each R4 is independently selected, may be the same or different, and is a C2 to C100 hydrocarbon group, each P is independently selected, may be the same or different, and is a polyamide diol.
The diisocyanate may e.g. comprise at least one selected from the group consisting of 4,4'-diphenylmethane diisocyanate; 2,4'-diphenylmethane diisocyanate; toluene-2,4-diisocyanate; toluene-2,6-diisocyanate; 3-phenyl-2-ethylenediisocyanate; 1,5-napthalene diisocyanate; 1,8-naphthalene diisocyanate; cumene-2,4-diisocyanate; 4-methyoxy-1,3-phenylene diisocyanate; 4-chloro-1,3-phenylenediisocyanate; 4-bromo-1,3-phenylene diisocyanate; 4-ethyloxy-1,3-phenylenediisocyanate; 2,4'-diisocyanatodiphenyl ether; 5,6-dimethyl-1,3-phenylenediisocyanate; 2,4-dimethyl-1,3-phenylenediisocyanate; 4,4'-diisocyanatodiphenyl ether; benzidinediisocyanate; 4,6-dimethyl-1,3-phenylenediisocyanate; 9,10-anthracenediisocyanate; 4,4'-diisocyanatodibenzyl; 3,3'-dimethyl-4,4'-diisocyanatodiphenylmethane; 2,6-dimethyl-4,4'-diisocyanatodiphenyl; 2,4-diisocyanatostilbene; 3,3'-dimethyl-4,4'-diisocyanatodiphenyl; 3,3'-dimethoxy-4,4'-diisocyanatodiphenyl; 1,4-anthracenediisocyanate; 2,5-fluorenediisocyanate; 1,3-phenylenediisocyanate; 1,4-phenylenediisocyanate; 2,6-diisocyanatobenzylfuran; bis(2-isocyanatoethyl)fumarate; bis(2-isocyanatoethyl)carbonate; bis(2-isocyanatoethyl)-4-cyclohexene-1,2-dicarboxylate; polymethylene polyphenyl isocyanate; 1,4-tetramethytenediisocyanate; 1,6-hexamethylenediisocyanate; 1,10-decamethylenediisocyanate; 1,3-cyclohexylenediisocyanate; 1,4-cyclohexylenediisocyanate; 4,4'-methylene-bis(cyclohexylisocyanate); m- and p-tetramethylxylene diisocyanate; 2,2,4-trimethyl-1,6-hexamethylene diisocyanate; m- and p-xylylene diisocyanate; 3-isocyanatomethyl-3,5,5-trimethylcyclohexyl isocyanate; phenylene bis(2-ethyl isocyanate); 4-methyl-1,3-cyclohexylene diisocyanate; 2-methyl-1,3-cyclohexylene diisocyanate; 2,4'-methylene bis(cyclohexylisocyanate); lower alkyl esters of 2,5-diisocyanatovaleric acid; and polyisocyanates containing three or more isocyanate groups per molecule such as triphenylmethane triisocyanate and 2,4-bis(4-isocyanatocyclohexylmethyl)cyclohexyl isocyanate, and mixtures and polymers thereof.
The polyamide diol P may e.g. be represented by the formula

T-[Z-(C=O)-R2-(C=O)]ₙ-Z-T

wherein n is at least 1; each T independently is selected, may be the same or different, and is X-R1-(C=O); each X is independently selected, may be the same or different and is H or OH; each R1 is independently selected, may be the same or different, and is a hydrocarbon group having from 2 to 54 carbon atoms each R2 is independently selected, may be the same or different, and is a hydrocarbon group having from 2 to 54 carbon atoms; and Z is of the form NLN, a pair of nitrogen atoms joined by a hydrocarbon link L, L may be a hydrocarbon group between the nitrogen atoms, or it may be a cyclical hydrocarbon group into which at least one of the nitrogen atoms is incorporated therein.
According to a fifth embodiment of the present invention, there is provided an article of manufacture comprising:
a substrate; and,
polyurethane of the present invention supported by the substrate, wherein the polyurethane is of the formula

   OCN-R4-N-(C=O)-P-[(C=O)-N-R4-N-(C=O-P]ₘ-(C=O)-N-R4-NCO

   wherein m is the number of repeating units; each R4 is independently selected, may be the same or different, and is a C2 to C100 hydrocarbon group; each P is independently selected, may be the same or different, and is a polyamide diol.
The polyamide diol P may e.g. be represented by the formula

T-[Z-(C=O)-R2-(C=O)]ₙ-Z-T

wherein n is at least 1; each T independently is selected, may be the same or different, and is X-R1-(C=O); each X is independently selected, may be the same or different and is H or OH; each R1 is independently selected, may be the same or different, and is a hydrocarbon group having from 2 to 54 carbon atoms; each R2 is independently selected, may be the same or different, and is a hydrocarbon group having from 2 to 54 carbon atoms; and Z is of the form NLN, a pair of nitrogen atoms joined by a hydrocarbon link L, L may be a hydrocarbon group between the nitrogen atoms, or it may be a cyclical hydrocarbon group into which at least one of the nitrogen atoms is incorporated therein.
According to a sixth embodiment of the present invention, there is provided a method for adhering comprising:
Bringing together a first surface, a second surface, and a polyurethane adhesive which is a polyurethane of the present invention, wherein the polyurethane adhesive is of the formula

OCN-R4-N-(C=O)-P-[(C=O)-N-R4-N-(C=O-P]ₘ-(C=O)-N-R4-NCO

wherein m is the number of repeating units; each R4 is independently selected, may be the same or different, and is a C2 to C100 hydrocarbon group; each P is independently selected, may be the same or different and is a polyamide diol.
The polyamide diol P may e.g. be represented by the formula

T-[Z-(C=O)-R2-(C=O)]ₙ-Z-T

wherein n is at least 1; each T independently is selected, may be the same or different, and is X-R1-(C=O); each X is independently selected, may be the same or different and is H or OH; each R1 is independently selected, may be the same or different, and is a hydrocarbon group having from 2 to 54 carbon atoms; each R2 is independently selected, may be the same or different, and is a hydrocarbon group having from 2 to 54 carbon atoms; and Z is of the form NLN, a pair of nitrogen atoms joined by a hydrocarbon link L, L may be a hydrocarbon group between the nitrogen atoms; or it may be a cyclical hydrocarbon group into which at least one of the nitrogen atoms is incorporated therein.

[Para 140] The present disclosure is to be taken as illustrative rather than as limiting the scope or nature of the claims below. Numerous modifications and variations will become apparent to those skilled in the art after studying the disclosure, including use of equivalent functional and/or structural substitutes for elements described herein, use of equivalent functional couplings for couplings described herein, and/or use of equivalent functional actions for actions described herein.

## Claims

1. A method of making a polyol, the method comprising:
contacting a diamine, dicarboxylic acid and a hydroxy substituted carboxylic acid together under conditions sufficient to form the polyol, wherein the diamine comprises polymeric diamines and non-polymeric diamines.

2. The method of claim 1 , wherein the polyol is a polyamide diol and is represented by the formula:
T-[Z-(C=O)-R2-(C=O)]ₙ-Z-T
wherein n is at least 1; each T independently is selected, may be the same or different, and is X-R1-(C=O); each X is independently selected, may be the same or different and is H or OH; each R1 is independently selected, may be the same or different, and is a hydrocarbon group having from 2 to 54 carbon atoms; each R2 is independently selected, may be the same or different, and is a hydrocarbon group having from 2 to 54 carbon atoms; and Z is a pair of N atoms joined by a hydrocarbon link,
optionally the polymeric diamine comprises polyoxyalkylenediamine, and the non-polymeric diamine comprises at least
one selected from the group consisting of ethylene diamine, 1,2-diaminopropane, 1,3-diaminopropane, 1,4-diaminobutane, p-xylene diamine, 1,6-hexamethylene diamine, 2-methylpentamethylene diamine, 4,4'-methylenebis(cyclohexylamine), 1,2-diamino-2-methylpropane, 1,5-diaminopentane, 2,2-dimethyl-1,3-propanediamine, 2-methyl-1,5-pentanediamine, 1,7-diaminoheptane, 1,8-diaminooctane, 2,5-dimethyl-2,5-hexanediamine, 1,9-diaminononane, 2,2-di-(4- cyclohexylamine)propane, polyglycol diamines, isophorone diamine, m-xylene diamine, cyclohexanebis(methylamine), bis-1,4-(2'-aminoethyl)benzene, 9-aminomethylstearylamine, 10-aminoethylstearylamine; 1,3-di-4-piperidyl propane, 1,10-diaminodecane, 1,12-diaminododecane, 1,18-diaminooctadecane, piperazine, N-aminoethylpiperazine, bis-(3-aminopropyl)piperazine, polyethylene polyamines such as diethylene triamine and triethylene tetramine, diethyltoluene diamine, methylene dianiline and bis(aminoethyl)diphenyl oxide,
the dicarboxylic acid optionally comprises at least one selected from the group of lower alkyl dicarboxylic acids consisting of oxalic, glutaric, malonic, adipic, succinic, suberic, sebacic, azelaic, dodecanedioic, pimelic, terephthalic, isophthalic, phthalic, napthalene dicarboxylic acids and 1,4- or 1,3-cyclohexane dicarboxylic acids, and at least one selected from the group of fatty acid dicarboxylic acids selected from the group consisting of C28 to C44 dicarboxylic acids, and
the hydroxy substituted carboxylic acid optionally comprises at least one selected from the group consisting of 12-hydroxy stearic acid, lithocholic acid, glycolic acid, lactic acid, 2-hydroxybutyric acid, 3-hydroxybutyric acid, 3-hydroxybenzoic acid, 4-hydroxybenzoic acid, 2-hydroxycinnamic acid, 3-hydroxycinnamic acid, 10-hydroxydecanoic acid, 2-hydroxy-3,3-dimethylbutyric acid, 9-hydroxy-9-fluorenecarboxylic acid, 16-hydroxyhexadecanoic acid, 2-hydroxyhexanoic acid, alpha-hydroxyisobutyric acid, 2-hydroxyisocaproic acid, alpha-hydroxyisovaleric acid, 3-hydroxymandelic acid, and 9-hydroxynonanoic acid; and, 4-hydroxyphenylacetic acid.

3. A method as claimed in claim 2, wherein the dicarboxylic acid comprises at least one selected from the group of lower alkyl dicarboxylic acids consisting of 1,6-hexanedioic acid (adipic acid), 1,7-heptanedioic acid (pimelic acid), 1,8-octanedioic acid (suberic acid), 1,9-nonanedioic acid (azelaic acid), or 1,10-decanedioic acid (sebacic acid); and comprises a C35 dicarboxylic acid, and the hydroxy substituted carboxylic acid optionally comprises 12-hydroxystearic acid.

4. A method as claimed in claim 3, wherein the dicarboxylic acid comprises 1,10-decanedioic acid (sebacic acid) and C36 dicarboxylic acid.

5. A method as claimed in claim 2, wherein the polymeric diamine comprises polyoxyalkylenediamine, and the non-polymeric diamine comprises at least one selected from the group consisting of ethylenediamine, hexamethylenediamine, piperazine, m-xylenediamine, 1,2-diamino-2-methylpropane, 1,5-diaminopentane, 2,2-dimethyl-1,3-propanediamine, 2-methyl-1,5-pentanediamine, 1,7-diaminoheptane, 1,8-diaminooctane, 2,5-dimethyl-2,5-hexanediamine, N-aminoethylpiperazine, and 1,9-diaminononane.

6. A method as claimed in claim 5, wherein the dicarboxylic acid comprises at least one selected from the group of lower alkyl dicarboxylic acids consisting of oxalic, glutaric, malonic, adipic, succinic, suberic, sebacic, azelaic, dodecanedioic, pimelic, terephthalic, isophthalic, phthalic, napthalene dicarboxylic acids and 1,4- or 1,3-cyclohexane dicarboxylic acids, and at least one selected from the group of fatty acid dicarboxylic acids selected from the group consisting of C28 to C44 dicarboxylic acids.

7. A method as claimed in claim 5, wherein the dicarboxylic acid comprises at least at selected from the group of lower alkyl dicarboxylic acids consisting of 1,6-hexanedioic acid (adipic acid), 1,7-heptanedioic acid (pimelic acid), 1,8-octanedioic acid (suberic acid), 1,9-nonanedioic acid (azelaic acid), or 1,10-decanedioic acid (sebacic acid); and comprises a C36 dicarboxylic acid, and optionally
the hydroxy substituted carboxylic acid comprises 12-hydroxy stearic acid.

8. A method as claimed in claim 7, wherein the dicarboxylic acid comprises 1,10-decanedioic acid (sebacic acid) and C36 dicarboxylic acid.

9. A method as claimed in claim 2, wherein the polymeric diamine comprises polyoxypropylenediamines and the non-polymeric diamine comprises piperazine.

10. A method as claimed in claim 9, wherein the dicarboxylic acid comprises at least one selected from the group of lower alkyl dicarboxylic acids consisting of oxalic, glutaric, malonic, adipic, succinic, suberic, sebacic, azelaic, dodecanedioic, pimelic, terephthalic, isophthalic, phthalic, napthalene dicarboxylic acids and 1,4- or 1,3-cyclohexane dicarboxylic acids, and at least one selected from the group of fatty acid dicarboxylic acids selected from the group consisting of C28 to C44 dicarboxylic acids.

11. A method as claimed in claim 9, wherein the dicarboxylic acid comprises at least one selected from the group of lower alkyl dicarboxylic acids consisting of 1,6-hexanedioic acid (adipic acid), 1,7-heptanedioic acid (pimelic acid), 1,8-octanedioic acid (suberic acid), 1,9-nonanedioic acid (azelaic acid), or 1,10-decanedioic acid (sebacic acid); and at least one selected from the group of fatty acid dicarboxylic acids selected from the group consisting of C32 to C40 dicarboxylic acids, and optionally the hydroxy substituted carboxylic acid comprises at least one selected from the group consisting of 12-hydroxy stearic acid, and lithocholic acid.

12. A method as claimed in claim 9, wherein the dicarboxylic acid comprises at least one selected from the group of lower alkyl dicarboxylic acids consisting of 1,6-hexanedioic acid (adipic acid), 1,7-heptanedioic acid (pimelic acid), 1,8-octanedioic acid (suberic acid), 1,9-nonanedioic acid (azelaic acid), or 1,10-decanedioic acid (sebacic acid); and comprises a C36 dicarboxylic acid.

13. A method as claimed in claim 12, wherein the hydroxy substituted carboxylic acid comprises 12-hydroxy stearic acid.

14. A method as claimed in claim 13, wherein the dicarboxylic acid comprises 1,10-decanedioic acid (sebacic acid) and a C36 dicarboxylic acid.

15. A polyamide diol composition represented by the formula
T-[Z-(C=O)-R2-(C=O)]ₙ-Z-T
wherein n is at least 1; each T independently is selected, may be the same or different, and is X-R1-(C=O); each X is independently selected, may be the same or different and is H or OH; each R1 is independently selected, may be the same or different, and is a hydrocarbon group having from 2 to 54 carbon atoms; each R2 is independently selected, may be the same or different, and is a hydrocarbon group having from 2 to 54 carbon atoms; Z is of the form NLN, a pair of nitrogen atoms joined by a hydrocarbon link L, L may be a hydrocarbon group between the nitrogen atoms, or it may be a cyclical hydrocarbon group into which at least one of the nitrogen atoms is incorporated therein, and wherein at least 1 but less than all Z groups comprises a polyoxyalkyl group.

16. A polyurethane composition represented by the formula
OCN-R1-N-(C=O)-P-[(C=O)-N-R4-N-(C=O)-P]ₘ-(C=O)-N-R4-NCO
wherein m is at least 1; each R4 is independently selected, may be the same or different, and is a C2 to C100 hydrocarbon group; each P is independently selected, may be the same or different, and is a polyamide diol represented by the formula
T-[Z-(C=O)-R2-(C=O)]ₙ-Z-T
wherein n is at least 1; each T independently is selected, may be the same or different, and is X-R1-(C=O); each X is independently selected, may be the same or different and is H or OH; each R1 is independently selected, may be the same or different, and is a hydrocarbon group having from 2 to 54 carbon atoms; each R2 is independently selected, may be the same or different, and is a hydrocarbon group having from 2 to 54 carbon atoms; and Z is of the form NLN, a pair of nitrogen atoms joined by a hydrocarbon link L, L may be a hydrocarbon group between the nitrogen atoms, or it may be a cyclical hydrocarbon group into which at least one of the nitrogen atoms is incorporated therein, and wherein at least 1 but less than all Z groups comprises a polyoxyalkyl group.

17. A polyurethane as claimed in claim 16, wherein L comprises in the range of 2 to 200 carbon atoms.

18. A polyurethane as claimed in claim 17, wherein R1 comprises in the range of 4 to 36 carbon atoms; and wherein R4 comprises in the range of 2 to 100 carbon atoms.

19. A polyurethane as claimed in claim 18, wherein R1 comprises in the range of 6 to 18 carbon atoms.

20. A polyurethane as claimed in claim 19, wherein R1 comprises 18 carbon atoms.

21. A polyurethane as claimed in claim 16, wherein at least one R2 comprises in the range of 2 to 12 carbon atoms, and at least one R2 comprises in the range of 28 to 44 carbon atoms; and wherein R4 comprises in the range of 2 to 50 carbon atoms.

22. A polyurethane as claimed in claim 20, wherein R1 comprises in the range of 4 to 36 carbon atoms.

23. A polyurethane as claimed in claim 21, wherein R1 comprises in the range of 6 to 18 carbon atoms.

24. A polyurethane as claimed in claim 22, wherein R1 comprises 18 carbon atoms.

25. A polyurethane as claimed in claim 16, wherein at least one R2 comprises 10 carbon atoms, and at least one R2 comprises 36 carbon atoms; and wherein R4 comprises in the range of 2 to 25 carbon atoms.

26. A polyurethane as claimed in claim 25, wherein R1 comprises in the range of 4 to 36 carbon atoms.

27. A polyurethane as claimed in claim 25, wherein R1 comprises in the range of 6 to 18 carbon atoms.

28. A polyurethane as claimed in claim 26, wherein R1 comprises 18 carbon atoms.

29. A method of making polyurethane comprising contacting a diisocyanate and a polyamide diol together under conditions sufficient to form a polyurethane,
wherein the diisocyanate comprises at least one selected from the group consisting of 4,4'-diphenylmethane diisocyanate; 2,4'-diphenylmethane diisocyanate; toluene-2,4-diisocyanate; toluene-2,6-diisocyanate; 3-phenyl-2-ethylenediisocyanate; 1,5-naphthalene diisocyanate; 1,8-naphthalene diisocyanate; cumene-2,4-diisocyanate; 4-methyoxy-1,3-pnenylene diisocyanate; 4-chloro-1,3-phenylenediisocyanate; 4-bromo-1,3-phenylene diisocyanate; 4-ethyloxy-1,3-phenylenediisocyanate; 2,4'-diisocyanatodiphenyl ether; 5,6-dimethyl-1,3-phenylenediisocyanate; 2,4-dimethyl-1,3-phenylenediisocyanate; 4,4'-diisocyanatodiphenyl ether; benzidinediisocyanate; 4,6-dimethyl-1,3-phenylenediisocyanate; 9,10-anthracenediisocyanate; 4,4'-diisocyanatodibenzyl; 3,3'-dimethyl-4,4'-diisocyanatodiphenylmethane; 2,6-dimethyl-4,4'-diisocyanatodiphenyl; 2,4-diisocyanatostilbene; 3,3'-dimethyl-4,4'-diisocyanatodiphenyl; 3,3'-dimethoxy-4,4'-diisocyanatodiphenyl; 1,4-anthracenediisocyanate; 2,5-fluorenediisocyanate; 1,3-phenylenediisocyanate; 1,4-phenylenediisocyanate; 2,6-diisocyanatobenzylfuran; bis(2-isocyanatoethyl)fumarate; bis(2-isocyanatoethyl)carbonate; bis(2-isocyanatoethyl)-4-cyclohexene-1,2-dicarboxylate; polymethylene polyphenyl isocyanate; 1,4-tetramethylenediisocyanate; 1,6-hexamethylenediisocyanate; 1,10-decamethylenediisocyanate; 1,3-cyclohexylenediisocyanate; 1,4-cyclohexylenediisocyanate; 4,4'-methylene-bis(cyclohexylisocyanate); m- and p-tetramethylxylene diisocyanate; 2,2,4-trimethyl-1,6-hexamethylene diisocyanate; m- and p-xylylene diisocyanate; 3-isocyanatomethyl-3,5,5-trimethylcyclohexyl isocyanate; phenylene bis(2-ethyl isocyanate); 4-methyl-1,3-cyclohexylene diisocyanate; 2-methyl-1,3-cyclohexylene diisocyanate; 2,4'-methylene bis(cyclohexylisocyanate); lower alkyl esters of 2,5-diisocyanatovaleric acid; and polyisocyanates containing three or more isocyanate groups per molecule such as triphenylmethane triisocyanate and 2,4-bis(4-isocyanatocyclohexylmethyl)cyclohexyl isocyanate, and mixtures and polymers thereof,
and the polyamide diol is a polyamide diol of the structure
T-[Z-(C=O)-R2-(C=O)]ₙ-Z-T
wherein n is at least 1; each T independently is selected, may be the same or different, and is X-R1-(C=O); each X is independently selected, may be the same or different and is H or OH; each R1 is independently selected, may be the same or different, and is a hydrocarbon group having from 2 to 54 carbon atoms; each R2 is independently selected, may be the same or different, and is a hydrocarbon group having from 2 to 54 carbon atoms; and Z is of the form NLN, a pair of nitrogen atoms joined by a hydrocarbon link L, L may be a hydrocarbon group between the nitrogen atoms, or it may be a cyclical hydrocarbon group into which at least one of the nitrogen atoms is incorporated therein, and wherein at least 1 but less than all Z groups comprises a polyoxyalkyl group.

30. An article of manufacture comprising:
a substrate; and
polyurethane supported by the substrate, wherein the polyurethane is as defined in any of claims 16 to 28.

31. A method for adhering comprising:
bringing together a first surface, a second surface and a polyurethane adhesive, wherein the polyurethane adhesive is a polyurethane as defined in any of claims 16 to 28.

## Patentansprüche

1. Verfahren zur Herstellung von einem Polyol, wobei das Verfahren umfasst:
in Kontakt bringen eines Diamins, einer Dicarbonsäure und einer Hydroxy-substituierten Carbonsäure unter Bedingungen, die ausreichend sind um ein Polyol zu bilden, wobei das Diamin polymere Diamine und nicht-polymere Diamine umfasst.

2. Das Verfahren nach Anspruch 1, wobei das Polyol ein Polyamiddiol ist und durch die Formel:
T-[Z-(C=O)-R2-(C=O)]ₙ-Z-T
dargestellt wird,
wobei n mindestens 1 ist; jedes T unabhängig voneinander ausgewählt ist und gleich oder unterschiedlich sein kann und X-R1-(C=O) ist; jedes X unabhängig voneinander ausgewählt ist und gleich oder unterschiedlich sein kann und H oder OH ist; jedes R1 unabhängig voneinander ausgewählt ist und gleich oder unterschiedlich sein kann und eine Kohlenwasserstoffgruppe, die 2 bis 54 Kohlenstoffatome aufweist, ist; jedes R2 unabhängig voneinander ausgewählt ist und gleich oder unterschiedlich sein kann und eine Kohlenwasserstoffgruppe, die 2 bis 54 Kohlenstoffatome aufweist, ist; und Z ein Paar von N-Atomen ist, die durch eine Kohlenwasserstoffverbindung verknüpft sind,
optional das polymere Diamin Polyoxyalkylendiamin umfasst und das nicht-polymere Diamin mindestens eines aus der Gruppe bestehend aus Ethylendiamin, 1,2-Diaminopropan, 1,3-Diaminopropan, 1,4-Diaminobutan, p-Xylendiamin, 1,6-Hexamethylendiamin, 2-Methylpentamethylendiamin, 4,4'-Methylenbis(cyclohexylamin), 1,2-Diamino-2-methylpropan, 1,5-Diaminopentan, 2,2-Dimethyl-1,3-propandiamin, 2-Methyl-1,5-pentandiamin, 1,7-Diaminoheptan, 1,8-Diaminooctan, 2,5-Dimethyl-2,5-hexandiamin, 1,9-Diaminononan, 2,2-Di-(4-cyclohexylamin)propan, Polyglykoldiamine, Isophorondiamin, m-Xylendiamin, Cyclohexanbis(methylamin), bis-1,4-(2'-Aminoethyl)benzol, 9-Aminomethylstearylamin, 10-Aminoethylstearylamin; 1,3-Di-4-piperidylpropan, 1,10-Diaminodecan, 1,12-Diaminododecan, 1,18-Diaminooctadecan, Piperazin, N-aminoethylpiperazin, bis-(3-Aminopropyl)piperazin, Polyethylenpolyamine wie Diethylentriamin und Triethylentetramin, Diethyltoluoldiamin, Methylendianilin und bis(Aminoethyl)diphenyloxid umfasst,
optional die Dicarbonsäure mindestens eine die ausgewählt wird aus der Gruppe der Niederalkyldicarbonsäuren, die aus Oxal-, Glutar-, Malon-, Adipin-, Bernstein-, Suberin-, Sebacin-, Azelain-, Laurin-, Pimelin-, Terephthal-, Isophthal-, Phthal-, Naphthalendicarbonsäure und 1,4- oder 1,3-Cyclohexandicarbonsäuren bestehen, und mindestens eine die ausgewählt wird aus der Gruppe der Fettsäure-Dicarbonsäuren, ausgewählt aus der Gruppe bestehend aus C28 bis C44 Dicarbonsäuren, umfasst, und
die Hydroxy-substituierte Carbonsäure optional mindestens eine umfasst, die ausgewählt wird aus der Gruppe bestehend aus 12-Hydroxystearinsäure, Lithocholsäure, Glycolsäure, Milchsäure, 2-Hydroxybuttersäure, 3- Hydroxybuttersäure, 3-Hydroxybenzoesäure, 4-Hydroxybenzoesäure, 2-Hydroxyzimtsäure, 3-Hydroxyzimtsäure, 10-Hydroxydecansäure, 2-Hydroxy-3,3-Dimethylbuttersäure, 9-Hydroxy-9-fluorencarbonsäure, 16-Hydroxyhexadecansäure, 2-Hydroxyhexansäure, alpha-Hydroxyisobuttersäure, 2-Hydroxyisocapronsäure, alpha-Hydroxyisovalerinsäure, 3-Hydroxymandelsäure, 9-Hydroxynonansäure und 4-Hydroxyphenylessigsäure.

3. Ein Verfahren wie in Anspruch 2 beansprucht, wobei die Dicarbonsäure mindestens eine umfasst, die ausgewählt wird aus der Gruppe der Niederalkyldicarbonsäuren, die aus 1,6-Hexandisäure (Adipinsäure), 1 ,7-Heptandisäure (Pimelinsäure), 1 ,8-Octandisäure (Suberinsäure), 1 ,9-Nonandisäure (Azelainsäure) oder 1,10-Decandisäure (Sebacinsäure) besteht; und eine C36 Dicarbonsäure umfasst und die Hydroxy-substituierte Carbonsäure, optional 12-Hydroxystearinsäure umfasst.

4. Ein Verfahren wie in Anspruch 3 beansprucht, wobei die Dicarbonsäure 1,10-Decandisäure (Sebacinsäure) und eine C36 Dicarbonsäure umfasst.

5. Ein Verfahren wie in Anspruch 2 beansprucht, wobei das polymere Diamine Polyoxyalkylenediamin umfasst und das nicht-polymere Diamin mindestens eines umfasst, das ausgewählt wird aus der Gruppe bestehend aus Ethylendiamin, Hexamethylendiamin, Piperazin, m-Xylendiamin, 1,2-Diamino-2-methylpropan, 1,5-Diaminopentan, 2,2-Dimethyl-1,3-propandiamin, 2-Methyl-1,5-pentandiamin, 1,7-Diaminoheptan, 1,8-Diaminooctan, 2,5-Dimethyl-2,5-hexandiamin, N-aminoethylpiperazin und 1,9-Diaminononan.

6. Ein Verfahren wie in Anspruch 5 beansprucht, wobei die Dicarbonsäure mindestens eine umfasst, die ausgewählt wird aus der Gruppe der Niederalkyldicarbonsäuren, die aus Oxal-, Glutar-, Malon-, Adipin-, Bernstein-, Suberin-, Sebacin-, Azelain-, Laurin-, Pimelin-, Terephthal-, Isophthal-, Phthal-, Naphthalendicarbonsäure und 1,4- oder 1,3-Cyclohexandicarbonsäure bestehen, und mindestens eine ausgewählt aus der Gruppe der Fettsäure-Dicarbonsäuren, die aus der Gruppe bestehend aus C28 bis C44 Dicarbonsäuren ausgewählt ist, umfasst.

7. Ein Verfahren wie in Anspruch 5 beansprucht, wobei die Dicarbonsäure mindestens eine umfasst, die ausgewählt wird aus der Gruppe der Niederalkyldicarbonsäuren, die aus 1,6-Hexandisäure (Adipinsäure), 1,7-Heptandisäure (Pimelinsäure), 1,8-Octandisäure (Suberinsäure), 1,9-Nonandisäure (Azelainsäure) oder 1,10-Decandisäure (Sebacinsäure) bestehen; und eine C36 Dicarbonsäure umfasst und die Hydroxy-substituierte Carbonsäure, optional 12-Hydroxystearinsäure umfasst.

8. Ein Verfahren wie in Anspruch 7 beansprucht, wobei die Dicarbonsäure 1,10-Decandisäure (Sebacinsäure) und eine C36 Dicarbonsäure umfasst.

9. Ein Verfahren wie in Anspruch 2 beansprucht, wobei das das polymere Diamin Polyoxyalkylenediamin umfasst und das nicht-polymere Diamin Piperazin umfasst.

10. Ein Verfahren wie in Anspruch 9 beansprucht, wobei die Dicarbonsäure mindestens eine, die ausgewählt wird aus der Gruppe der Niederalkyldicarbonsäuren, die aus Oxal-, Glutar-, Malon-, Adipin-, Bernstein-, Suberin-, Sebacin-, Azelain-, Laurin-, Pimelin-, Terephthal-, Isophthal-, Phthal-, Napthalendicarbonsäure und 1,4- oder 1,3-Cyclohexandicarbonsäuren bestehen, und mindestens eine ausgewählt aus der Gruppe der Fettsäure-Dicarbonsäuren, die aus der Gruppe bestehend aus C28 bis C44 Dicarbonsäuren ausgewählt ist, umfasst.

11. Ein Verfahren wie in Anspruch 9 beansprucht, wobei die Dicarbonsäure mindestens eine ausgewählt wird aus der Gruppe der Niederalkyldicarbonsäuren, die aus 1,6-Hexandisäure (Adipinsäure), 1,7-Heptandisäure (Pimelinsäure), 1,8-Octandisäure (Suberinsäure), 1,9-Nonandisäure (Azelainsäure) oder 1,10-Decandisäure (Sebacinsäure) bestehen; und mindestens eine, die ausgewählt wird aus der Gruppe der Fettsäure-Dicarbonsäuren, die aus der Gruppe bestehend aus C32 bis C40 Dicarbonsäuren ausgewählt sind, umfasst, und die Hydroxy-substituierte Carbonsäure, optional mindestens eine, die ausgewählt wird aus der Gruppe bestehend aus 12-Hydroxystearinsäure und Lithocholsäure umfasst.

12. Ein Verfahren wie in Anspruch 9 beansprucht, wobei die Dicarbonsäure mindestens eine umfasst, die ausgewählt wird aus der Gruppe der Niederalkyldicarbonsäuren, die aus 1,6-Hexandisäure (Adipinsäure), 1,7-Heptandisäure (Pimelinsäure), 1,8-Octandisäure (Suberinsäure), 1,9-Nonandisäure (Azelainsäure) oder 1,10-Decandisäure (Sebacinsäure) bestehen; und eine C36 Dicarbonsäure umfasst.

13. Ein Verfahren wie in Anspruch 12 beansprucht, wobei die Hydroxy-substituierte Carbonsäure 12-Hydroxystearinsäure umfasst.

14. Ein Verfahren wie in Anspruch 13 beansprucht, wobei die Dicarbonsäure 1,10-Decandisäure (Sebacinsäure) und eine C36 Dicarbonsäure umfasst.

15. Eine Polyamiddiol-Zusammensetzung dargestellt durch die Formel
T-[Z-(C=O)-R2-(C=O)]ₙ-Z-T
wobei n mindestens 1 ist; jedes T unabhängig voneinander ausgewählt ist und gleich oder unterschiedlich sein kann und X-R1-(C=O) ist; jedes X unabhängig voneinander ausgewählt ist und gleich oder unterschiedlich sein kann und H oder OH ist; jedes R1 unabhängig voneinander ausgewählt ist und gleich oder unterschiedlich sein kann und eine Kohlenwasserstoffgruppe, die 2 bis 54 Kohlenstoffatome aufweist, ist; jedes R2 unabhängig voneinander ausgewählt ist und gleich oder unterschiedlich sein kann und eine Kohlenwasserstoffgruppe, die 2 bis 54 Kohlenstoffatome aufweist, ist; Z die Form NLN aufweist, ein Paar von Stickstoffatomen verknüpft durch eine Kohlenwasserstoffverbindung L, L eine Kohlenwasserstoffgruppe zwischen den Stickstoffatomen sein kann oder eine zyklische Kohlenwasserstoffgruppe, in die mindestens eines der Stickstoffatome eingebunden ist, sein kann, und wobei mindestens eine aber weniger als alle Z-Gruppen eine Polyoxyalkylgruppe umfassen.

16. Eine Polyurethan-Zusammensetzung dargestellt durch die Formel
OCN-R4-N-(C=O)-P-[(C=O)-N-R4-N-(C=O)-P]ₘ-(C=O)-N-R4-NCO
wobei m n mindestens 1 ist; jedes R4 unabhängig voneinander ausgewählt ist und gleich oder unterschiedlich sein kann und eine C2 bis C100 Kohlenwasserstoffgruppe ist; jedes P unabhängig voneinander ausgewählt ist und gleich oder unterschiedlich sein kann und ein Polyamiddiol ist, das durch die Formel
T-[Z-(C=O)-R2-(C=O)]ₙ-Z-T
dargestellt ist,
wobei n mindestens 1 ist; jedes T unabhängig voneinander ausgewählt ist und gleich oder unterschiedlich sein kann und X-R1-(C=O) ist; jedes X unabhängig voneinander ausgewählt ist und gleich oder unterschiedlich sein kann und H oder OH ist; jedes R1 unabhängig voneinander ausgewählt ist und gleich oder unterschiedlich sein kann und eine Kohlenwasserstoffgruppe, die 2 bis 54 Kohlenstoffatome aufweist, ist; jedes R2 unabhängig voneinander ausgewählt ist und gleich oder unterschiedlich sein kann und eine Kohlenwasserstoffgruppe, die 2 bis 54 Kohlenstoffatome aufweist, ist; Z die Form NLN aufweist, ein Paar von Stickstoffatomen verknüpft durch eine Kohlenwasserstoffverbindung L, L eine Kohlenwasserstoffgruppe zwischen den Stickstoffatomen sein kann oder eine zyklische Kohlenwasserstoffgruppe, in die mindestens eines der Stickstoffatome eingebunden ist, sein kann, und wobei mindestens eine aber weniger als alle Z-Gruppen eine Polyoxyalkylgruppe umfassen.

17. Ein Polyurethan wie in Anspruch 16 beansprucht, wobei L einen Bereich von 2 bis 200 Kohlenstoffatomen umfasst.

18. Ein Polyurethan wie in Anspruch 17 beansprucht, wobei R1 einen Bereich von 4 bis 36 Kohlenstoffatomen umfasst und wobei R4 einen Bereich von 2 bis 100 Kohlenstoffatomen umfasst.

19. Ein Polyurethan wie in Anspruch 18 beansprucht, wobei R1 einen Bereich von 6 bis 18 Kohlenstoffatomen umfasst.

20. Ein Polyurethan wie in Anspruch 19 beansprucht, wobei R1 18 Kohlenstoffatome umfasst.

21. Ein Polyurethan wie in Anspruch 16 beansprucht, wobei mindestens ein R2 einen Bereich von 2 bis 12 Kohlenstoffatomen umfasst und wobei mindestens ein R2 einen Bereich von 28 bis 44 Kohlenstoffatomen umfasst und wobei R4 einen Bereich von 2 bis 50 Kohlenstoffatomen umfasst.

22. Ein Polyurethan wie in Anspruch 20 beansprucht, wobei R1 einen Bereich von 4 bis 36 Kohlenstoffatomen umfasst.

23. Ein Polyurethan wie in Anspruch 21 beansprucht, wobei R1 einen Bereich von 6 bis 18 Kohlenstoffatomen umfasst.

24. Ein Polyurethan wie in Anspruch 22 beansprucht, wobei R1 18 Kohlenstoffatome umfasst.

25. Ein Polyurethan wie in Anspruch 16 beansprucht, wobei mindestens ein R2 10 Kohlenstoffatome umfasst und wobei mindestens ein R2 36 Kohlenstoffatome umfasst und wobei R4 einen Bereich von 2 bis 25 Kohlenstoffatomen umfasst.

26. Ein Polyurethan wie in Anspruch 25 beansprucht, wobei R1 einen Bereich von 4 bis 36 Kohlenstoffatomen umfasst.

27. Ein Polyurethan wie in Anspruch 25 beansprucht, wobei R1 einen Bereich von 6 bis 18 Kohlenstoffatomen umfasst.

28. Ein Polyurethan wie in Anspruch 26 beansprucht, wobei R1 18 Kohlenstoffatome umfasst.

29. Ein Verfahren zur Herstellung von Polyurethan umfassend in Kontakt bringen eines Diisocyanats und eines Polyamiddiols unter Bedingungen, die ausreichend sind um ein Polyurethan zu bilden,
wobei das Diisocyanat mindestens eines umfasst, das ausgewählt wird aus der Gruppe bestehend aus 4,4'-Diphenylmethandiisocyanat; 2,4'-Diphenylmethandiisocyanat; Toluol-2,4-diisocyanat; Toluol-2,6-diisocyanat; 3-Phenyl-2-ethylendiisocyanat; 1,5-Naphthalendiisocyanat; 1,8-Naphthalendiisocyanat; Cumol-2,4-diisocyanat; 4-Methyoxy-1,3-phenylendiisocyanat; 4-Chloro-1,3-phenylendiisocyanat; 4-Bromo-1,3-phenylendiisocyanat; 4-Ethyloxy-1,3-phenylendiisocyanate; 2,4'-Diisocyanatodiphenylether; 5,6-Dimethyl-1,3-phenylendiisocyanat; 2,4-Dimethyl-1,3-phenylendiisocyanat; 4,4'-Diisocyanatodiphenylether; Benzidindiisocyanat; 4,6-Dimethyl-1,3-phenylendiisocyanat; 9,10-Anthracendiisocyanat; 4,4'-Diisocyanatodibenzyl; 3,3'-Dimethyl-4,4'-diisocyanatodiphenylmethan; 2,6-Dimethyl-4,4'-diisocyanatodiphenyl; 2,4-Diisocyanatostilben; 3,3'-Dimethyl-4,4'-diisocyanatodiphenyl; 3,3'-Dimethoxy-4,4'-diisocyanatodiphenyl; 1,4-Anthracendiisocyanat; 2,5-Fluorendiisocyanat; 1,3-Phenylendiisocyanat; 1,4-Phenylendiisocyanat; 2,6-Diisocyanatobenzylfuran; bis(2-Isocyanatoethyl)fumarat; bis(2-Isocyanatoethyl)carbonat; bis(2-Isocyanatoethyl)-4-cyclohexene-1,2-dicarboxylat; Polymethylenpolyphenylisocyanat; 1,4-Tetramethylendiisocyanat; 1,6-Hexamethylendiisocyanat; 1,10-Decamethylendiisocyanat; 1,3-Cyclohexylendiisocyanat; 1,4-Cyclohexylendiisocyanate; 4,4'-Methylen-bis(cyclohexylisocyanat); mund p-Tetramethylxylendiisocyanat; 2,2,4- Trimethyl-1 ,6-hexamethylendiisocyanat; m- und p-Xylylendiisocyanat; 3-Isocyanatomethyl-3,5,5-trimethylcyclohexylisocyanat; Phenylen bis(2-ethylisocyanat); 4-Methyl-1,3-cyclohexylendiisocyanat; 2-Methyl-1,3-cyclohexylendiisocyanat; 2,4'-Methylen bis(cyclohexylisocyanat); Niederalkylester der 2,5-Diisocyanatovaleransäure und Polyisocyanate, die drei oder mehr Isocyanatgruppen pro Molekül aufweisen, wie Triphenylmethantriisocyanat und 2 ,4-bis(4-Isocyanatocyclohexylmethyl)cyclohexylisocyanat und Gemische und Polymere davon,
und das Polyamiddiol ein Polyamiddiol ist, das durch die Formel
T-[Z-(C=O)-R2-(C=O)ₙ-Z-T
dargestellt wird,
wobei n mindestens 1 ist; jedes T unabhängig voneinander ausgewählt ist und gleich oder unterschiedlich sein kann und X-R1-(C=O) ist; jedes X unabhängig voneinander ausgewählt ist und gleich oder unterschiedlich sein kann und H oder OH ist; jedes R1 unabhängig voneinander ausgewählt ist und gleich oder unterschiedlich sein kann und eine Kohlenwasserstoffgruppe, die 2 bis 54 Kohlenstoffatome aufweist, ist; jedes R2 unabhängig voneinander ausgewählt ist und gleich oder unterschiedlich sein kann und eine Kohlenwasserstoffgruppe, die 2 bis 54 Kohlenstoffatome aufweist, ist; Z die Form NLN aufweist, ein Paar von Stickstoffatomen verknüpft durch eine Kohlenwasserstoffverbindung L, L eine Kohlenwasserstoffgruppe zwischen den Stickstoffatomen sein kann oder eine zyklische Kohlenwasserstoffgruppe, in die mindestens eines der Stickstoffatome eingebunden ist, sein kann, und wobei mindestens eine aber weniger als alle Z-Gruppen eine Polyoxyalkylgruppe umfassen.

30. Ein hergestellter Gegenstand umfassend:
einen Träger; und
Polyurethan, das durch den Träger getragen wird, wobei das Polyurethan wie in einem der Ansprüche 16 bis 28 definiert ist.

31. Ein Verfahren zum Anhaften umfassend:
Zusammenbringen einer ersten Oberfläche, einer zweiten Oberfläche und eines Polyurethan-Klebstoffs, wobei der Polyurethanklebstoff ein Polyurethan ist, wie in einem der Ansprüche 16 bis 28 definiert.

## Revendications

1. Procédé de production d'un polyol, le procédé comprenant: la mise en contact d'une diamine, d'un acide dicarboxylique et d'un acide carboxylique hydroxy-substitué ensemble dans des conditions suffisantes pour former le polyol, où la diamine comprend des diamines polymères et des diamines non polymères.

2. Procédé selon la revendication 1, où le polyol est un polyamide diol et est représenté par la formule:
T-[Z-(C=O)-R2-(C=O)]ₙ-Z-T
où n est au moins 1; chaque T est choisi indépendamment, peut être identique ou différent, et est X-R1-(C=O); chaque X est choisi indépendamment, peut être identique ou différent et est H ou OH; chaque R1 est choisi indépendamment, peut être identique ou différent, et est un groupe hydrocarboné ayant de 2 à 54 atomes de carbone; chaque R2 est choisi indépendamment, peut être identique ou différent, et est un groupe hydrocarboné ayant de 2 à 54 atomes de carbone; et Z est une paire d'atomes N joints par un lien hydrocarboné,
éventuellement la diamine polymère comprend une polyoxyalkylènediamine, et la diamine non polymère comprend au moins
une choisie dans le groupe consistant en l'éthylènediamine, le 1,2-diaminopropane, le 1,3-diaminopropane, le 1,4-diaminobutane, la p-xylène diamine, la 1,6-hexaméthylène diamine, la 2-méthylpentaméthylène diamine, la 4,4'-méthylènebis(cyclohexylamine), le 1,2-diamino-2-méthylpropane, le 1,5-diaminopentane, la 2,2-diméthyl-1,3-propanediamine, la 2-méthyl-1,5-pentanediamine, le 1,7-diaminoheptane, le 1,8-diaminooctane, la 2,5-diméthyl-2,5-hexanediamine, le 1,9-diaminononane, le 2,2-di-(4-cyclohexylamine)propane, les polyglycol diamines, l'isophorone diamine, la m-xylène diamine, la cyclohexanebis(méthylamine), le bis-1,4-(2'-aminoéthyl)benzène, la 9-aminométhylstéarylamine, la 10-aminoéthylstéarylamine; le 1,3-di-4-pipéridyl propane, le 1,10-diaminodécane, le 1,12-diaminododécane, le 1,18-diaminooctadécane, la pipérazine, la N-aminoéthylpipérazine, la bis-(3-aminopropyl)pipérazine, les polyéthylène polyamines comme la diéthylène triamine et la triéthylène tétramine, la diéthyltoluène diamine, la méthylène dianiline et l'oxyde de bis(aminoéthyl)diphényle,
l'acide dicarboxylique comprend éventuellement au moins un choisi dans le groupe des acides alkyle inférieur dicarboxyliques consistant en les acides oxalique, glutarique, malonique, adipique, succinique, subérique, sébacique, azélaïque, dodécanedioïque, pimélique, téréphtalique, isophtalique, phtalique, naphtalène dicarboxylique et les acides 1,4- ou 1,3-cyclohexane dicarboxylique, et au moins un choisi dans le groupe des acides dicarboxyliques acides gras choisis dans le groupe consistant en les acides C28 à C44 dicarboxyliques, et
l'acide carboxylique hydroxy-substitué comprend éventuellement au moins un choisi dans le groupe consistant en l'acide 12-hydroxy stéarique, l'acide lithocholique, l'acide glycolique, l'acide lactique, l'acide 2-hydroxybutyrique, l'acide 3-hydroxybutyrique, l'acide 3-hydroxybenzoïque, l'acide 4-hydroxybenzoïque, l'acide 2-hydroxycinnamique, l'acide 3-hydroxycinnamique, l'acide 10-hydroxydécanoïque, l'acide 2-hydroxy-3,3-diméthylbutyrique, l'acide 9-hydroxy-9-fluorènecarboxylique, l'acide 16-hydroxyhexadécanoïque, l'acide 2-hydroxyhexanoïque, l'acide alpha-hydroxyisobutyrique, l'acide 2-hydroxyisocaproïque, l'acide alpha-hydroxyisovalérique, l'acide 3-hydroxymandélique, et l'acide 9-hydroxynonanoïque; et l'acide 4-hydroxyphénylacétique.

3. Procédé selon la revendication 2, où l'acide dicarboxylique comprend au moins un choisi dans le groupe des acides alkyle inférieur dicarboxyliques consistant en l'acide 1,6-hexanedioïque (acide adipique), l'acide 1,7-heptanedioïque (acide pimélique), l'acide 1,8-octanedioïque (acide subérique), l'acide 1,9-nonanedioïque (acide azélaïque), ou l'acide 1,10-décanedioïque (acide sébacique); et comprend un acide C35 dicarboxylique, et l'acide carboxylique hydroxy-substitué comprend éventuellement l'acide 12-hydroxystéarique.

4. Procédé selon la revendication 3, où l'acide dicarboxylique comprend l'acide 1,10-décanedioïque (acide sébacique) et un acide C36 dicarboxylique.

5. Procédé selon la revendication 2, où la diamine polymère comprend une polyoxyalkylènediamine, et la diamine non polymère comprend au moins un choisi dans le groupe consistant en l'éthylènediamine, l'hexaméthylènediamine, la pipérazine, la m-xylènediamine, le 1,2-diamino-2-méthylpropane, le 1,5-diaminopentane, la 2,2-diméthyl-1,3-propanediamine, la 2-méthyl-1,5-pentanediamine, le 1,7-diaminoheptane, le 1,8-diaminooctane, la 2,5-diméthyl-2,5-hexanediamine, la N-aminoéthylpipérazine et le 1,9-diaminononane.

6. Procédé selon la revendication 5, où l'acide dicarboxylique comprend au moins un choisi dans le groupe des acides alkyle inférieur dicarboxyliques consistant en l'acide oxalique, l'acide glutarique, l'acide malonique, l'acide adipique, l'acide succinique, l'acide subérique, l'acide sébacique, l'acide azélaïque, l'acide dodécanedioïque, l'acide pimélique, l'acide téréphtalique, l'acide isophtalique, l'acide phtalique, l'acide naphtalène dicarboxylique et l'acide 1,4- ou 1,3-cyclohexane dicarboxylique, et au moins un choisi dans le groupe des acides dicarboxyliques acides gras choisis dans le groupe consistant en les acides C28 à C44 dicarboxyliques.

7. Procédé selon la revendication 5, où l'acide dicarboxylique comprend au moins un choisi dans le groupe des acides alkyle inférieur dicarboxyliques consistant en l'acide 1,6-hexanedioïque (acide adipique), l'acide 1,7-heptanedioïque (acide pimélique), l'acide 1,8-octanedioïque (acide subérique), l'acide 1,9-nonanedioïque (acide azélaïque) ou l'acide 1,10-décanedioïque (acide sébacique); et comprend un acide C36 dicarboxylique, et éventuellement l'acide carboxylique hydroxy-substitué comprend l'acide 12-hydroxy stéarique.

8. Procédé selon la revendication 7, où l'acide dicarboxylique comprend l'acide 1,10-décanedioïque (acide sébacique) et un acide C36 dicarboxylique.

9. Procédé selon la revendication 2, où la diamine polymère comprend des polyoxypropylènediamines et la diamine non polymère comprend la pipérazine.

10. Procédé selon la revendication 9, où l'acide dicarboxylique comprend au moins un choisi dans le groupe des acides alkyle inférieur dicarboxyliques consistant en l'acide oxalique, l'acide glutarique, l'acide malonique, l'acide adipique, l'acide succinique, l'acide subérique, l'acide sébacique, l'acide azélaïque, l'acide dodécanedioïque, l'acide pimélique, l'acide téréphtalique, l'acide isophtalique, l'acide phtalique, l'acide naphtalène dicarboxylique et l'acide 1,4- ou 1,3-cyclohexane dicarboxylique, et au moins un choisie dans le groupe des acides dicarboxyliques acides gras choisis dans le groupe consistant en les acides C28 à C44 dicarboxyliques.

11. Procédé selon la revendication 9, où l'acide dicarboxylique comprend au moins un choisi dans le groupe des acides alkyle inférieur dicarboxyliques consistant en l'acide 1,6-hexanedioïque (acide adipique), l'acide 1,7-heptanedioïque (acide pimélique), l'acide 1,8-octanedioïque (acide subérique), l'acide 1,9-nonanedioïque (acide azélaïque) ou l'acide 1,10-décanedioïque (acide sébacique); et au moins un choisi dans le groupe des acides dicarboxyliques acides gras choisis dans le groupe consistant en les acides C32 à C40 dicarboxyliques, et éventuellement l'acide carboxylique hydroxy-substitué comprend au moins un choisi dans le groupe consistant en l'acide 12-hydroxystéarique, et l'acide lithocholique.

12. Procédé selon la revendication 9, où l'acide dicarboxylique comprend au moins un choisi dans le groupe des acides alkyle inférieur dicarboxyliques consistant en l'acide 1,6-hexanedioïque (acide adipique), l'acide 1,7-heptanedioïque (acide pimélique), l'acide 1,8-octanedioïque (acide subérique), l'acide 1,9-nonanedioïque (acide azélaïque) ou l'acide 1,10-décanedioïque (acide sébacique); et comprend un acide C36 dicarboxylique.

13. Procédé selon la revendication 12, où l'acide carboxylique hydroxy-substitué comprend l'acide 12-hydroxy stéarique.

14. Procédé selon la revendication 13, où l'acide dicarboxylique comprend l'acide 1,10-décanedioïque (sébacique) et un acide C36 dicarboxylique.

15. Composition de polyamide diol représentée par la formule
T-[Z-(C=O)-R2-(C=O)]ₙ-Z-T
où n est au moins 1; chaque T est choisi indépendamment, peut être identique ou différent, et est X-R1-(C=O); chaque X est choisi indépendamment, peut être identique ou différent et est H ou OH; chaque R1 est choisi indépendamment, peut être identique ou différent, et est un groupe hydrocarboné ayant de 2 à 54 atomes de carbone; chaque R2 est choisi indépendamment, peut être identique ou différent, et est un groupe hydrocarboné ayant de 2 à 54 atomes de carbone; Z est de la forme NLN, une paire d'atomes d'azote joints par un lien hydrocarboné L, L peut être un groupe hydrocarboné entre les atomes d'azote, ou ce peut être un groupe hydrocarboné cyclique dans lequel au moins l'un des atomes d'azote est incorporé à l'intérieur, et où au moins 1 mais moins que tous les groupes Z comprend un groupe polyoxyalkyle.

16. Composition de polyuréthane représentée par la formule
OCN-R4-N-(C=O)-P-[(C=O)-N-R4-N-(C=O)-P]ₘ-(C=O)-N-R4-NCO
où m est au moins 1; chaque R4 est choisi indépendamment, peut être identique ou différent, et est un groupe C2 à C100 hydrocarboné; chaque P est choisi indépendamment, peut être identique ou différent, et est un polyamide diol représenté par la formule
T-[Z-(C=O)-R2-(C=O)]ₙ-Z-T
où n est au moins 1; chaque T est choisi indépendamment, peut être identique ou différent, et est X-R1-(C=O); chaque X est choisi indépendamment, peut être identique ou différent et est H ou OH; chaque R1 est choisi indépendamment, peut être identique ou différent, et est un groupe hydrocarboné ayant de 2 à 54 atomes de carbone; chaque R2 est choisi indépendamment, peut être identique ou différent, et est un groupe hydrocarboné ayant de 2 à 54 atomes de carbone; et Z est de la forme NLN, une paire d'atomes d'azote joints par un lien hydrocarboné L, L peut être un groupe hydrocarboné entre les atomes d'azote, ou ce peut être un groupe hydrocarboné cyclique dans lequel au moins l'un des atomes d'azote est incorporé à l'intérieur, et où au moins 1 mais moins que tous les groupes Z comprend un groupe polyoxyalkyle.

17. Polyuréthane selon la revendication 16, où L comprend dans la plage de 2 à 200 atomes de carbone.

18. Polyuréthane selon la revendication 17, où R1 comprend dans la plage de 4 à 36 atomes de carbone; et où R4 comprend dans la plage de 2 à 100 atomes de carbone.

19. Polyuréthane selon la revendication 18, où R1 comprend dans la plage de 6 à 18 atomes de carbone.

20. Polyuréthane selon la revendication 19, où R1 comprend 18 atomes de carbone.

21. Polyuréthane selon la revendication 16, où au moins un R2 comprend dans la plage de 2 à 12 atomes de carbone, et au moins un R2 comprend dans la plage de 28 à 44 atomes de carbone; et où R4 comprend dans la plage de 2 à 50 atomes de carbone.

22. Polyuréthane selon la revendication 20, où R1 comprend dans la plage de 4 à 36 atomes de carbone.

23. Polyuréthane selon la revendication 21, où R1 comprend dans la plage de 6 à 18 atomes de carbone.

24. Polyuréthane selon la revendication 22, où R1 comprend 18 atomes de carbone.

25. Polyuréthane selon la revendication 16, où au moins un R2 comprend 10 atomes de carbone, et au moins un R2 comprend 36 atomes de carbone; et où R4 comprend dans la plage de 2 à 25 atomes de carbone.

26. Polyuréthane selon la revendication 25, où R1 comprend dans la plage de 4 à 36 atomes de carbone.

27. Polyuréthane selon la revendication 25, où R1 comprend dans la plage de 6 à 18 atomes de carbone.

28. Polyuréthane selon la revendication 26, où R1 comprend 18 atomes de carbone.

29. Procédé de production de polyuréthane comprenant la mise en contact d'un diisocyanate et d'un polyamide diol ensemble dans des conditions suffisantes pour former un polyuréthane,
où le diisocyanate comprend au moins un choisi dans le groupe consistant en le 4,4'-diphénylméthane diisocyanate; le 2,4'-diphénylméthane diisocyanate; le toluène-2,4-diisocyanate; le toluène-2,6-diisocyanate; le 3-phényl-2-éthylènediisocyanate; le 1,5-naphtalène diisocyanate; le 1,8-naphtalène diisocyanate; le cumène-2,4-diisocyanate; le 4-méthyoxy-1,3-phénylène diisocyanate; le 4-chloro-1,3-phénylènediisocyanate; le 4-bromo-1,3-phénylène diisocyanate; le 4-éthyloxy-1,3-phénylènediisocyanate; le 2,4'-diisocyanatodiphényl éther; le 5,6-diméthyl-1,3-phénylènediisocyanate; le 2,4-diméthyl-1,3-phénylènediisocyanate; le 4,4'-diisocyanatodiphényl éther; le benzidinediisocyanate; le 4,6-diméthyl-1,3-phénylènediisocyanate; le 9,10-anthracènediisocyanate; le 4,4'-diisocyanatodibenzyle; le 3,3'-diméthyl-4,4'-diisocyanatodiphénylméthane; le 2,6-diméthyl-4,4'-diisocyanatodiphényle; le 2,4-diisocyanatostilbène; le 3,3'-diméthyl-4,4'-diisocyanatodiphényle; le 3,3'-dimethoxy-4,4'-diisocyanatodiphényle; le 1,4-anthracènediisocyanate; le 2,5-fluorènediisocyanate; le 1,3-phénylènediisocyanate; le 1,4-phénylènediisocyanate; le 2,6-diisocyanatobenzylfurane; le fumarate de bis(2-isocyanatoéthyle); le carbonate de bis(2-isocyanatoéthyle); le 4-cyclohexène-1,2-dicarboxylate de bis(2-isocyanatoéthyle); le polyméthylène polyphényl isocyanate; le 1,4-tétraméthylènediisocyanate; le 1,6-hexaméthylènediisocyanate; le 1,10-décaméthylènediisocyanate; le 1,3-cyclohexylènediisocyanate; le 1,4-cyclohexylènediisocyanate; le 4,4'-méthylène-bis(cyclohexylisocyanate); le m- et p-tétraméthylxylène diisocyanate; le 2,2,4-triméthyl-1,6-hexaméthylène diisocyanate; le m- et p-xylylène diisocyanate; le 3-isocyanatométhyl-3,5,5-triméthylcyclohexyl isocyanate; le phénylène bis(2-éthyl isocyanate); le 4-méthyl-1,3-cyclohexylène diisocyanate; le 2-méthyl-1,3-cyclohexylène diisocyanate; le 2,4'-méthylène bis(cyclohexylisocyanate); les alkylesters inférieurs de l'acide 2,5-diisocyanatovalérique; et les polyisocyanates contenant trois groupes isocyanate par molécule ou plus comme le triphénylméthane triisocyanate et le 2,4-bis(4-isocyanatocyclohexylméthyl)cyclohexyl isocyanate, et leurs mélanges et polymères,
et le polyamide diol est un polyamide diol de structure
T-[Z-(C=O)-R2-(C=O)]ₙ-Z-T
où n est au moins 1; chaque T est choisi indépendamment, peut être identique ou différent, et est X-R1-(C=O); chaque X est choisi indépendamment, peut être identique ou différent et est H ou OH; chaque R1 est choisi indépendamment, peut être identique ou différent, et est un groupe hydrocarboné ayant de 2 à 54 atomes de carbone; chaque R2 est choisi indépendamment, peut être identique ou différent, et est un groupe hydrocarboné ayant de 2 à 54 atomes de carbone; et Z est de la forme NLN, une paire of d'atomes d'azote joints par un lien hydrocarboné L, L peut être un groupe hydrocarboné entre les atomes d'azote, ou il peut être un groupe hydrocarboné cyclique dans lequel au moins l'un des atomes d'azote est incorporé à l'intérieur, et où au moins 1 mais moins que tous les groupes Z comprend un groupe polyoxyalkyle.

30. Produit manufacturé comprenant:
un substrat; et
un polyuréthane supporté par le substrat, où le polyuréthane est défini comme dans l'une quelconque des revendications 16 à 28.

31. Procédé pour faire adhérer comprenant :
la disposition ensemble d'une première surface, d'une seconde surface et d'un adhésif polyuréthane, où l'adhésif polyuréthane est un polyuréthane défini comme dans l'une quelconque des revendications 16 à 28.
